# EUROPEAN PATENT SPECIFICATION

(11) **EP 4 306 812 B1**
(45) Date of publication and mention of the grant of the patent: **23.04.2025**
(21) Application number: 22185222.1
(22) Date of filing: 15.07.2022
(51) Int. Cl.: F16B 21/00

(54) **CONNECTOR FOR CONNECTING MODULES IN A TEMPORARY CONSTRUCTION**
VERBINDER ZUM VERBINDEN VON MODULEN IN EINER TEMPORÄREN KONSTRUKTION
CONNECTEUR POUR LA CONNEXION DE MODULES DANS UNE CONSTRUCTION TEMPORAIRE

(43) Date of publication of application: 17.01.2024
(73) Proprietor: BeMatrix BV, 8800 Roeselare (BE)
(72) Inventor: Van der Vennet, Edwin André Irené, 9880 Aalter (BE); Deraeve, Brecht, 8800 Roeselare (BE); Vandemaele, Stefan, 9030 Mariakerke (BE)
(74) Representative: IP HILLS NV

(56) References cited:
- US-A- 4 778 487
- US-A1- 2014 056 668

## Description

### Field of the Invention

The present invention generally relates to connectors, suitable for releasably connecting modules in a temporary construction, e.g. a temporary exhibition stand. In particular, a connector is presented, that allows to connect frame modules in a convenient and time-efficient way, while guaranteeing a highly reliable and robust connection.

### Background of the Invention

During trade fairs and exhibitions, temporary exhibition stands are used for the duration of the event, and disassembled again afterwards. In a modular solution for stand building, e.g. described in BE1020560A3, a set of standard frame modules is provided, the modules serving as generic building blocks. By connecting together multiple frame modules, a temporary exhibition stand according to a desired design may be constructed. A frame module typically comprises a rectangular frame with a series of holes provided on each side face of the frame. The holes allow to connect a frame module to an adjacent frame module, by means of fasteners inserted through corresponding holes, the fasteners thereby allowing for a releasable connection. Typically, the holes are relatively large, thereby avoiding that frame modules would have to be positioned very accurately before connection. After constructing the skeleton by means of multiple connected frame modules, the walls may be covered with panels or canvases to obtain the desired look of the temporary exhibition stand. Very large stands may be constructed with such a modular solution, often comprising multiple floors and using tens to hundreds of frame modules.

Typically, for releasably connecting the frame modules, no standard fasteners are used, but connectors specifically designed for use in the modular system, often allowing for a toolless application. Besides being adapted to the layout of the frames and holes, the connector needs to provide a highly reliable and robust connection of frame modules. Indeed, in the case of an impact on the construction, e.g. someone falls against the exhibition stand, the connector needs to withstand the occurring tensile and bending loads, thereby preventing that the whole construction would collapse.

In current modular solution for stand building, typically a screwing principle is used in the connector: the connector comprises a cylindrical body, provided with screw thread at one outer end and a head piece at the opposing outer end, and a separate second component similar to a nut. After inserting the cylindrical body through corresponding holes, the nut component is screwed onto the body, such that frame surfaces are clamped between the nut and the head piece of the body. An example of such a connector is found in BE1020560A3 or https://www.bematrix.com/en/products/parts/d30-connectors/toolless-connector-d30/.

A disadvantage of the currently used connector, is that the two individual connector components may be separated and get lost after disassembly. Moreover, for making the connection, the two parts must be brought together, requiring both hands for mounting the connector. This makes application of the connector cumbersome, and thus time-inefficient. Furthermore, for each connector to be placed, the nut component needs to be screwed onto the body, thereby requiring additional time. As substantial time is needed for application of each individual connector, assembly and disassembly of the construction may take long, certainly for stands having a huge amount of frame modules.

Accordingly, there is a need for a connector allowing to connect frame modules in a more convenient and time-efficient way.

In the prior art, solutions are presented aiming at an improved assembly efficiency. For example, CN201780736U discloses a rapid connecting lock for connecting adjacent display modules in a LED display screen. De connector consists of two parts, namely a lock body and a groove block. The lock body comprises a fixed block, and a rod provided with a transverse pin. The groove block comprises a groove, adapted to receive the transverse pin. In connected state, two module surfaces are clamped between the groove block and the fixed block of the lock body. The connector is brought in the locked state by rotating the groove block over 90 degrees, such that the transverse pin of the lock body engages with the groove of the groove block. Locking is thus obtained by means of the locking pin, thereby requiring less time than when a screwing principle is used. However, still two separate parts are used in the connector, thereby adversely affecting the ease of implementation and application efficiency. Finally, the disclosed connector is used in combination with LED frames having specific holes with elongated shape. Therefore, it cannot as such be used for connecting any type of frame modules, e.g. having large round holes.

On the other hand, connectors are known specifically focussed on providing an easy and quick fastening and release, but not being suitable for applications requiring a robust connection under load and impact conditions. For example, classical ball lock pins, like presented in EP0838600B1 or https://uk.misumiec.com/vona2/detail/221006462889/#, are used for temporarily holding together two components, e.g. for releasably fixing a work piece, or for the alignment of sheet metal during a welding process. This one-piece connector, relying on locking by means of small balls, allows for a practical and quick application, but under impact or load conditions, would easily release unintentionally. This type of connector is therefore not suitable for connecting frame modules in a temporary exhibition stand, wherein highly reliable and robust connections need to be guaranteed under all conditions, thereby preventing collapse of the huge construction.

US 4 778 487 A discloses a device for assembling the framework of a temporary exhibition stand.

US2014/0056668 A1 discloses a bolt for the detachable connection of two component parts.

It is an objective of the present invention to disclose a connector that resolves one or more of the above-described shortcomings of the prior art solutions. More particularly, it is an objective to present a connector suitable for use in a temporary exhibition stand, that allows to connect frame modules in a convenient and time-efficient way, while guaranteeing a highly reliable and robust connection.

### Summary of the Invention

According to a first aspect of the present invention, the above identified objectives are realized by a connector for releasably connecting two modules in a modular system for temporary constructions, defined by claim 1, the connector comprising:
- a sleeve extending in longitudinal direction between a front and rear outer end, the sleeve comprising one or more circumferential slits at a first longitudinal position;
- a head piece adapted to be attached to the front outer end of the sleeve, the head piece comprising a flat surface, in attached condition defining a front clamping surface situated in a transverse plane and facing the sleeve;
- a first set of one or more locking elements, of which each locking element comprises a flat surface, wherein the one or more locking elements of the first set are placed in the one or more circumferential slits at the first longitudinal position and are movable between
   ∘ a collapsed condition, wherein the locking elements are at least partially recessed in the sleeve, and
   ∘ an extended condition, wherein the locking elements protrude from the sleeve, such that the associated protruding flat surfaces together define a rear clamping surface situated in a transverse plane and facing the front clamping surface,
the connector being adapted to clamp two module parts between the front and rear clamping surface in extended condition of the first set of locking elements, after being inserted through corresponding holes in the module parts in collapsed condition of the first set of locking elements.

Thus, the invention concerns a connector. The connector is suitable for releasably connecting two modules in a modular system for temporary constructions. A temporary construction may be a temporary exhibition stand, or another type of construction that is intended to be disassembled after temporary use, like podium or decor elements. A modular system refers to a solution making use of a set of generic elements or modules, serving as building blocks. A module is for example a frame module, comprising a rectangular frame composed of four hollow columns. Other examples of modules are a display module, having a LED display mounted on a frame, or a truss module, having an elongated rectangular frame provided with internal braces. The module comprises holes, allowing to connect the module to another module by means of a connecter inserted through corresponding holes of both modules. Typically, each side face of the frame is provided with a series of holes, positioned according to a spatial grid. Typically, the holes are relatively large, thereby avoiding that frame modules would have to be positioned very accurately before connection. In connected state, two module parts, comprised in two respective modules, are clamped together. For example, the module part is one of the columns of a frame module, and in connected state side faces of respective columns are clamped against each other. Other shapes of module parts are possible, as long as holes are provided that allow to connect adjacent modules by means of a connector placed through corresponding holes.

The connector comprises a sleeve, extending in longitudinal direction between a front and rear outer end. A sleeve refers to a hollow, elongated body. In an embodiment, the sleeve comprises a central portion, of which any transverse cross section is circular or has an envelope being circular. For example, the sleeve has a cylindrical central portion, in which grooves and/or slits may be provided. In an embodiment, the sleeve comprises a conical end portion connected to the central portion and located at the rear outer end of the sleeve. Such a conical end portion allows for an easy insertion of the connector into a hole of the module part.

The connector further comprises a head piece. The head piece is attached to the front outer end of the sleeve. In an embodiment, the head piece may be detachable from the sleeve, but during use of the connector, it is in attached condition. The head piece comprises a flat surface. When the head piece is attached to the sleeve, the flat surface defines a front clamping surface situated in a transverse plane and facing the sleeve. The front camping surface is a first surface that will contribute to clamping the module parts.

The sleeve comprises one or more circumferential slits at a first longitudinal position, in which a first set of one or more locking elements are placed. A slit refers to an opening having an elongated shape. The slit is circumferential, meaning that it extends across the whole or part of the circumference of the sleeve. The sleeve may comprise one slit, in which multiple locking elements are placed, may comprise multiple slits, with one locking element per slit, may comprise multiple slits with multiple locking elements in one slit, etc. In an embodiment, the first set of locking elements contains two separate locking elements, opposing each other in a transverse cross section.

Every locking element comprised in the first set is movable between a collapsed condition and an extended condition. In collapsed condition, the locking elements are completely or partly recessed in the sleeve. This may also be referred to as a retracted position of the locking elements. In the extended condition, the locking elements protrude from the sleeve, meaning that a larger portion of the locking elements is located outside the sleeve outer surface than is the case in collapsed condition. For example, the connector may comprise an internal body, that is movable within the sleeve by pushing a push button. By moving the internal body in longitudinal direction, the locking elements may switch from fully collapsed to fully extended condition.

Any of the locking elements of the first set comprises a flat surface. For example, a locking element has one flat side facing the head piece, or has two opposing flat sides. In extended condition of the locking elements, any of the flat surfaces protrudes completely or partially from the sleeve. These protruding flat surfaces together define a rear clamping surface, being a second surface that will contribute to clamping the module parts. The rear clamping surface is situated in a transverse plane and faces the front clamping surface defined by the head piece.

In collapsed condition of the locking elements, the transverse cross section of the connector is small enough to be inserted through a hole of the module part. Thus, for applying the connector, the locking elements are first brought in collapsed condition, e.g. by pushing a push button, after which the sleeve is inserted through aligned holes of two adjacent modules. While being inserted, the sleeve crosses the module parts, via the holes. After being inserted, the locking elements may be brought in extended condition, e.g. by releasing the push button. In connected condition, the two module parts are clamped between the front clamping surface, defined by the head piece, and the rear clamping surface, defined by the extended locking elements. Thus, in connected condition, the two module parts are clamped between two flat surfaces, while the sleeve extends through the holes of the module parts.

The invented connector has several advantages compared to prior art connectors. Firstly, the connector allows to connect frame modules in a convenient and time-efficient way. Indeed, the connector is provided as one piece, thereby eliminating the risk that multiple connector pieces would get separated, and allowing for a convenient application. Moreover, due to the locking principle, application of the connector can be done with one hand, thereby saving time. Finally, locking the connector only requires changing the position of the locking elements, e.g. by pushing or releasing a push button. This saves a substantial amount of time compared to existing connectors wherein a nut component needs to be screwed onto the sleeve for every connector being placed.

Secondly, while allowing for an easy and quick fastening and release, the invented connector still offers the required strength and robustness. In particular, the connector allows to clamp the modules with a high clamping force, thereby enabling a connection that offers sufficient resistance against high tensile loads. Indeed, in connected condition, the two module parts are clamped between two flat surfaces of the connector. In particular, even at the position of the locking elements, a flat clamping surface is used, being provided by the flat side of the protruding locking elements. Using such a flat clamping surface ensures that occurring stresses are evenly distributed over a relatively large surface, thereby preventing that locally high stresses would arise under tensile load. The latter is essential, as concentrated point loads arising under tensile force may cause local deformations in the frame, the latter e.g. being made from Aluminium, thereby causing the connector to be pulled through the deformed frame side and releasing the connection.

In summary, the invented connector allows for a combination of increased connection speed and substantial clamping strength. Offering such a combination is not evident, as on the one hand flat clamping surfaces are important with respect to the clamping strength, but on the other hand flat surfaces do not allow for an easy surface decrease tailored to the size of the connection holes. Moreover, even when having considered to implement the surface decrease by means of retractable elements, arriving at flat retractable elements is not evident, as no advantage can be taken of the rolling nature of classic locking balls, the latter allowing for an easy retracking mechanism.

Finally, the connector also allows for a connection offering sufficient resistance against bending load and torsion. Indeed, often the frame modules have hollow columns. In connected condition of the modules, the front plates of these columns are pushed against one another. By making the sleeve of the connector long enough, however, clamping of the connector surfaces may be done on the back plates of the respective columns, instead of clamping the front plates. In this way, the long sleeve body crosses the entire two module columns, thereby preventing twisting of the modules under a torsion load.

Optionally, any locking element of the first set comprises a curved edge facing away from the sleeve. In an embodiment, the curved edge of the locking element has a transverse cross section corresponding to an arc of a circle. For example, in collapsed condition of the locking elements, the curved edges are on a circle of which the centre corresponds to the centre point of the sleeve. In other words, the curved edges, in collapsed condition, together define a circle concentrical to a transverse cross section of the sleeve. In another embodiment, the curved edges are on a circle concentric with the sleeve, when being in extended condition. Providing locking elements with a curved edge has the advantage that in extended condition, any locking element protrudes from the cylindrical sleeve over a similar height. Thus, over the circumference of the connector, in a transverse plane, a clamping surface is obtained with even distribution of occurring stresses. Moreover, in retracked position, the locking elements follow the round shape of the sleeve, thereby allowing for easy insertion through a circular hole.

Optionally, the head piece and the front outer end of the sleeve both comprise screw thread, such that the head piece, by being screwed, is movable in longitudinal direction, thereby allowing to adapt the distance between the front and rear clamping surface. In this way, the clamping length may be adapted, thereby compensating for any clearances or intolerances between two adjacent modules.

Optionally, the connector further comprises:
- an internal body, placed at least partially inside the sleeve and moveable in longitudinal direction,
- a first linear cam assembly, comprising, per locking element of the first set:
   ∘ a cam element, comprising a ramp which is inclined with respect to the longitudinal direction;
   ∘ a follower, in contact with the cam element and being adapted to ride on the ramp surface, such that moving the cam element in longitudinal direction causes the follower to be moved according to a translation perpendicular to the longitudinal direction,
wherein any cam element of the first linear cam assembly is comprised in the internal body, and any follower of the first linear cam assembly is comprised in a locking element of the first set, thereby allowing for a translation of any locking element of the first set according to a direction perpendicular to the longitudinal direction, by moving the internal body in longitudinal direction. Thus, the connector comprises one or more linear cams, for moving the locking elements of the first set between the collapsed and extended condition. One linear cam is provided per locking element of the first set. If the first set comprises multiple locking elements, multiple linear cams are provided, together forming a linear cam assembly. Every linear cam allows to move a locking element up and down with respect to the sleeve, by moving an internal body of the sleeve backward and forward. For this purpose, every locking element comprises a follower, and the internal body, placed inside the sleeve, comprises a cam element. The cam element comprises a flat surface that is inclined with respect to a transverse plane and inclined with respect to the longitudinal direction. For example, the cam element is provided as a recess or groove in the internal body, the recess or groove having a ramp. Moving the cam element in longitudinal direction causes the follower to be moved according to a translation in a transverse plane, the translation being in a direction perpendicular to the longitudinal direction. The follower and cam element together form the linear cam. Moving the internal body in longitudinal direction, causes every locking element of the first set to be translated in a transverse plane, any of these translations being perpendicular to the longitudinal direction. Using a linear cam assembly for moving the locking elements has the advantage that the locking elements may be actively pushed inwardly or outwardly. The latter is required since, given the flat shape of the locking elements, no use can be made of the rolling nature of classic locking balls.

Optionally, the connector comprises a push button, adapted to move the internal body relative to the sleeve in longitudinal direction when pushing the button, the internal body thereby being displaced towards the rear outer end of the sleeve. This means that a portion of the internal body being inside the hollow sleeve, moves away from the front outer end of the sleeve and approaches the rear outer end of the sleeve.

Optionally, the connector comprises a spring, adapted to move the internal body relative to the sleeve in longitudinal direction when releasing the button, the internal body thereby being displaced towards the front outer end of the sleeve. This means that a portion of the internal body being inside the hollow sleeve, moves away from the rear outer end of the sleeve and approaches the front outer end of the sleeve.

Optionally, the sleeve comprises one or more openings at a second longitudinal position, located between the first longitudinal position and the front outer end, and the connector comprises a second set of one or more locking elements, wherein the one or more locking elements of the second set are placed in the one or more openings of the sleeve at the second longitudinal position, and are movable between a collapsed condition, wherein the locking elements are at least partially recessed in the sleeve, and an extended condition, wherein the locking elements protrude from the sleeve. This implies that, additional to the first set of locking elements, the connector comprises a second set of locking elements. The second set of locking elements are placed at a second longitudinal position, between the head piece and the first set of locking elements. For this purpose, the sleeve comprises one or more openings at the second longitudinal position. Various shapes are possible for the locking elements of the second set. In an embodiment, the locking elements of the second set have a shape similar like the locking elements of the first set, thus comprising a flat surface at one side or both sides. In this case, the openings at the second longitudinal position are provided as circumferential slits. In another embodiment, the locking elements of the second set have a round shape, thus being provided as balls. In this case, the openings at the second longitudinal position may be round openings.

The advantage of providing a second set of locking elements, is that rotation of the connector, when being mounted, may be avoided. Indeed, after inserting the connector through the connection holes, the locking elements of the second set are in extended condition, just like the locking elements of the first set. When rotating the connector around its axis, the locking elements of the second set may engage with blocking elements provided at the inside of the frame module, thereby impeding a further rotation of the connector. In this way, adjusting the clamp length by screwing of the head piece can be done in a convenient way, without being hindered by a spinning connector. Furthermore, a preferred angular position of the connector may be ensured. For example, the locking elements of the second set may be placed such that, when blocking a further rotation, the locking elements of the first set clamp at a preferred surface of the frame module, e.g. at that side of the hole where the frame has the highest strength.

Optionally, each of the openings at the second longitudinal position is a circumferential slit, and each of the locking elements of the second set comprises a flat surface, such that in the extended condition, the associated protruding flat surfaces together define a central clamping surface situated in a transverse plane and facing the front clamping surface. This implies that, just like the first set of locking elements, the locking elements of the second set have a flat surface. For example, they have one flat side or two opposing flat sides. The advantage of using flat locking elements in the second set, is that these locking elements may contribute to clamping the modules. Indeed, the locking elements of the second set may be positioned such that, in mounted condition of the connector, they are in contact with, or close to, an internal face of a frame module. During impact, clamping will be done at two different positions: between the head piece and first set of locking elements, and between the head piece and second set of locking elements. Just like for the first set of locking elements, the flat clamping surface provided by the second set of locking elements, allows for an even distribution of occurring stresses during impact. This further contributes to a high clamping force, thereby enabling a connection that offers sufficient resistance against high tensile loads.

In an embodiment, any locking element of the second set comprises a curved edge facing away from the sleeve, the curved edge having a transverse cross section corresponding to an arc of a circle. In a further embodiment, the second set of locking elements contains two separate locking elements, opposing each other in a transverse cross section.

Optionally, any locking element of the second set has an angular position rotated over 90 degrees relative to one of the locking elements of the first set. This implies that, in a front view of the connector and extended condition of all locking elements, a central point or centre point of a locking element of the second set is rotated over 90 degrees compared to the central or centre point of a locking element of the first set. In an embodiment, the first and second set of locking elements contain the same amount of locking elements, such that any locking element of the second set corresponds to another locking element of the first set, the angular position of the former being rotated over 90 degrees relative to the latter. In an embodiment, any locking element of the second set has the same shape as one of the locking elements of the first set, but has an angular position rotated over 90 degrees. For example, the locking elements of both sets may be positioned such that in extended condition of the locking elements, a transverse cross section at the first longitudinal position is obtained by rotating the transverse cross section at the second longitudinal position over 90 degrees.

Optionally, the connector further comprises a second linear cam assembly, comprising, per locking element of the second set:
- a cam element, comprising a ramp which is inclined with respect to the longitudinal direction;
- a follower, in contact with the cam element and being adapted to ride on the ramp surface, such that moving the cam element in longitudinal direction causes the follower to be moved according to a translation perpendicular to the longitudinal direction,
wherein any cam element of the second linear cam assembly is comprised in the internal body, and any follower of the second linear cam assembly is comprised in a locking element of the second set, thereby allowing for a translation of any locking element of the second set according to a direction perpendicular to the longitudinal direction, by moving the internal body in longitudinal direction. This implies that, similar like the first set of locking elements, a linear cam mechanism is used for moving the locking elements of the second set, between the collapsed and extended condition.

Optionally, the longitudinal position of the one or more cam elements of the first linear cam assembly, and the longitudinal position of the one or more cam elements of the second linear cam assembly, is such that moving the internal body in longitudinal direction causes the locking elements of the first and second set to be translated sequentially. This implies that the two cam assemblies are designed and positioned such that, when moving forward or backward the internal body, a locking element of the second set and a locking element of the first set do not move simultaneously, but in a consecutive, non-synchronous way. In other words, when moving the internal body in longitudinal direction, the locking element of the first set and the locking element of the second set are changed from collapsed to extended condition in a successive, sequential way. Thus, there is a delay between the elements of the first set being collapsed and the elements of the second set being collapsed: when moving the internal body towards the rear outer end of the sleeve, the locking elements of the second set collapse first, and the locking elements of the first set collapse afterwards. Similarly, when moving the internal body towards the front outer end of the sleeve, the locking elements of the first set extend first, and the locking elements of the second set extend afterwards, after some delay. In this way, it can be ensured that the first set of locking elements will always move to the extended condition, thereby guaranteeing sufficient clamping of the modules. Indeed, even if extending the locking elements of the second set is somehow blocked or hindered, this does not impede the first locking elements to be extended.

Optionally:
- the sleeve comprises one or more openings at a third longitudinal position, and comprises one or more openings at a fourth longitudinal position, the third and fourth longitudinal position both located between the first longitudinal position and the front outer end;
- the connector comprises a third and a fourth set of one or more locking elements, wherein the one or more locking elements of the third respectively fourth set are placed in the one or more openings of the sleeve at the third respectively fourth longitudinal position and are movable between
   ∘ a collapsed condition, wherein the locking elements are at least partially recessed in the sleeve, and
   ∘ an extended condition, wherein the locking elements protrude from the sleeve,
the connector being adapted to clamp a module plate between the locking elements of the third set and the locking elements of the fourth set, in extended condition of the third and fourth set of locking elements, thereby allowing to releasably attach the connector to a module.

This means that, additional to the first set of locking elements, the connector comprises a third and fourth set of locking elements. The third and fourth set of locking elements are placed at a third respectively fourth longitudinal position, between the head piece and the first set of locking elements. For this purpose, the sleeve comprises one or more openings at the third and fourth longitudinal position. Various shapes are possible for the locking elements of the third and fourth set. In an embodiment, the locking elements of the third and fourth set have a shape similar like the locking elements of the first set, thus comprising a flat surface at one side or both sides. In this case, the openings at the third respectively fourth longitudinal position are provided as circumferential slits. In another embodiment, the locking elements of the third and fourth set have a round shape, thus being provided as balls. In this case, the openings at the third respectively fourth longitudinal position may be round openings. The locking elements of the third and fourth set may be mutually connected or may be separate. The mutual distance between the third and fourth longitudinal position is such that a plate of the module fits in between. In particular, it is such that, in extended condition of the locking elements, the plate can be clamped between a locking element of the third set and a locking element of the fourth set. In this way, the connector may be releasably attached to an individual module, after disassembly of the temporary construction. Indeed, the connector may be inserted through a connection hole of the individual module, in collapsed condition of the locking elements, and when the third and fourth locking element are at both opposing sides of the module plate, the locking elements are extended. The module plate is thus clamped between the locking elements of the third and fourth set respectively. This has the advantage that, after disassembly of the temporary construction, connectors may be attached to a module during transport or storage. By holding the connectors in such a way, it is prevented that connectors would get separated from the frame modules, or would get lost.

Optionally,
- each of the openings at the third longitudinal position and each of the openings at the fourth longitudinal position is a circumferential slit;
- each of the locking elements of the third and fourth set comprises a flat surface, such that in extended condition of both the third and fourth set of locking elements, the associated protruding flat surfaces together define a pair of holding surfaces situated in a transverse plane and facing each other, the connector being adapted to clamp a module plate between both holding surfaces, thereby allowing to releasably attach the connector to a module. This implies that, just like the first set of locking elements, the locking elements of the third and fourth set have a flat surface. For example, a locking element of the third or fourth set has one flat side or two opposing flat sides. The module plate may be clamped between the flat surface of a locking element of the third set and the flat surface of a locking element of the fourth set. This ensures a reliable clamping of the connector during transport or stockage, without deformations being formed in the frame.

Optionally,
- any of the one or more circumferential slits at the third longitudinal position forms, together with a corresponding circumferential slit at the fourth longitudinal position, a single circumferential slit extending between the third and fourth longitudinal position, and
- any locking element of the third set is connected to a corresponding locking element of the fourth set by an intermediate element, wherein each of the one or more intermediate elements comprises a top surface facing away from the sleeve and being parallel to the longitudinal direction.
This implies that any locking element of the third set is connected to a locking element of the fourth set, by means of an intermediate element. The combined locking element is placed in a circumferential slit extending between the third and fourth longitudinal position. In this way, when a plate module is clamped between a locking element of the third set and a locking element of the fourth set, the module plate may as well be clamped against the intermediate element. This allows the connector to be held in a firmer way, not being loose and less being subject to vibrations. Moreover, providing a wider slit results in a more robust sleeve design and improved manufacturability. Indeed, no small piece of sleeve material, being difficult to manufacture and forming a weak point, is present as would be the case when two separate small slits would be used.

In an embodiment, any locking element of the third and fourth set comprises a curved edge facing away from the sleeve, the curved edge having a transverse cross section corresponding to an arc of a circle. In a further embodiment, the third and fourth set of locking elements each contains two separate locking elements, opposing each other in a transverse cross section. In a further embodiment, the third and fourth longitudinal position are both between the first and second longitudinal position. This implies that when a connector is provided comprising a first, second, third and fourth set of locking elements, the third and fourth set are positioned between the second set and the first set.

Optionally, any locking element of the third respectively fourth set has an angular position rotated over 90 degrees relative to one of the locking elements of the first set. This implies that, in a front view of the connector and extended condition of all locking elements, a central point or centre point of a locking element of the third respectively fourth set is rotated over 90 degrees compared to the central or centre point of a locking element of the first set. In an embodiment, the first, third and fourth set of locking elements contain the same amount of locking elements, such that any locking element of the third respectively fourth set corresponds to another locking element of the first set, the angular position of the former being rotated over 90 degrees relative to the latter. In an embodiment, any locking element of the third respectively fourth set has the same shape as one of the locking elements of the first set, but has an angular position rotated over 90 degrees. In an embodiment, the connector comprises a first, second, third and fourth set of locking elements, wherein the locking elements of the second, third and fourth set have the same angular position or orientation, while a locking element of the first set has an angular position rotated over 90 degrees relative to a locking element of the other sets.

Optionally, the connector further comprises a third linear cam assembly, comprising, per locking element of the third set:
- a cam element, comprising a ramp which is inclined with respect to the longitudinal direction;
- a follower, in contact with the cam element and being adapted to ride on the ramp surface, such that moving the cam element in longitudinal direction causes the follower to be moved according to a translation perpendicular to the longitudinal direction,
wherein any cam element of the third linear cam assembly is comprised in the internal body, and any follower of the third linear cam assembly is comprised in a locking element of the third set, thereby allowing for a translation of any locking element of the third and fourth set according to a direction perpendicular to the longitudinal direction, by moving the internal body in longitudinal direction. This implies that, similar like the first set of locking elements, a linear cam mechanism is used for moving the locking elements of the third and fourth set, between the collapsed and extended condition. In this case, any locking element of the third set is connected to a corresponding locking element of the fourth set, thereby allowing for a simultaneous movement of both locking elements by means of the follower riding on the cam element.

Optionally, the longitudinal position of the one or more cam elements of the first linear cam assembly, and the longitudinal position of the one or more cam elements of the third linear cam assembly, is such that moving the internal body in longitudinal direction causes the locking elements of the first set, and the locking elements of the third and fourth set, to be translated sequentially. This implies that the two cam assemblies are designed and positioned such that, when moving forward or backward the internal body, a locking element of the third set and a locking element of the first set do not move simultaneously, but in a consecutive, non-synchronous way. This means that, similar like the delay between the second and first set of locking elements, there is a delay between the elements of the first set being collapsed and the elements of the second set being collapsed. Or in other words, after inserting the connector through the connection holes, the locking elements of the first set will extend first, followed by extending the elements of the third and fourth set. In this way, it can be ensured that the first set of locking elements will always move to the extended condition, not being hindered by the other locking elements.

In an embodiment, the connector comprises a first, second, third and fourth set of locking elements, wherein the second, third and fourth set are translated simultaneously, while the locking elements of the first set are translated successively with respect to the other sets of locking elements.

According to a second aspect of the present invention, there is provided a system for releasably connecting frame modules in a modular system for temporary constructions, the system comprising:
- at least one connector according to the first aspect of the invention;
- at least two frame modules, wherein the first and second frame module each comprise at least one column, wherein
   ∘ any column has a flat back face and flat front face extending in height direction and transverse direction;
   ∘ any column comprises one or more holes extending in longitudinal direction between the back and front face, and
wherein the connector is adapted to:
- in collapsed condition of the locking elements, be inserted through corresponding holes in both frame modules, and
- in extended condition of the locking elements, clamp together both columns, wherein the front faces of the respective columns are in contact, and the head and rear clamping surface of the connector each engages with the back face of a respective column.

This implies that the system allows to connect two frame modules, by means of the invented connector. Every frame module comprises at least one column, which may be hollow or may be solid. In connected condition, the two columns are positioned with their front faces against one another, and the connector is placed through corresponding connection holes. The first clamping surface of the connector, provided by the head piece, is in contact with the back face of the first column, and the second clamping surface of the connector, provided by the first set of locking elements, is in contact with the back face of the second column. Thus, the connector crosses the interior of both columns and clamps the columns at their back faces. This implies that the sleeve of the connector is sufficiently long; its length is specifically adapted to the dimension in longitudinal direction of two adjacent columns. By using such a long sleeve, the connector allows for a connection offering sufficient resistance against bending load and torsion. Indeed, the long sleeve body crosses the entire two module columns, thereby preventing twisting of the modules under a torsion load.

Optionally, each of the two columns are hollow. Thus, a column of a frame module comprises a front and back plate parallel to each other with a cavity therebetween, wherein the front and back plate both comprise an inner surface and an outer surface, the inner surface of the front and back plate directed towards the cavity and the outer surface of the front and back plate facing away from the cavity. In this, the outer surface of the back plate corresponds to the back face of the column and the outer surface of the front plate corresponds to the front face of the column.

Optionally, in connected condition of the frame modules, the back plate and front plate of respective columns are positioned between the head clamping surface defined by the head piece of the connector and the central clamping surface defined by the second set of locking elements. In this case, each of the two columns is hollow, and the connector comprises a first and second set of locking elements, the latter defining a central clamping surface. In connected condition, the locking elements of the second set are positioned inside the cavity of the second column, close to the inner surface of the front plate. In this way, the second set of locking elements contributes to clamping the modules. Indeed, during impact, clamping will be done at two different positions: between the head piece and first set of locking elements, and between the head piece and second set of locking elements.

Optionally, one or more blocking elements are attached to the inner surface of the front and/or back plate of any frame module, each of the blocking elements protruding from the inner surface and extending in longitudinal direction, such that in connected condition of the frame modules, rotating the connector around the longitudinal direction causes at least one of the locking elements of the second set to engage with at least one of the blocking elements, thereby blocking a further rotation of the connector. In this case, each of the two columns is hollow, and the connector comprises a first and second set of locking elements. Every frame module comprises one or more blocking elements. For example, two blocking elements are attached to the inner surface of the front plate, at opposing sides of the holes, each of the two blocking elements comprising a flat surface extending in longitudinal direction and extending in height direction. After inserting the connector through the connection holes, the locking elements of the second set are in extended condition. When rotating the connector around its axis, the locking elements of the second set will engage with the blocking elements, thereby impeding a further rotation of the connector. In this way, adjusting the clamp length by screwing of the head piece can be done in a convenient way, without being hindered by a spinning connector. Furthermore, a preferred angular position of the connector may be ensured. For example, the locking elements of the second set may be placed such that, when blocking a further rotation, the locking elements of the first set clamp at a preferred surface of the frame module, e.g. at that side of the hole where the frame has the highest strength.

Optionally,
- the sleeve of the connector comprises a longitudinal groove at its outer surface;
- the system comprises at least one stopping clip, adapted to be placed inside any of the holes, the stopping clip comprising a tab,
wherein the tab and the longitudinal groove are adapted to form a tongue and groove connection between the stopping clip and the connector, thereby allowing for a displacement of the connector in longitudinal connection over the length of the groove, while blocking a rotation of the connector around the longitudinal direction. Thus, the central portion of the sleeve comprises a straight groove, extending in longitudinal direction, the groove having two outer ends. A stopping clip may be placed inside a connection hole, via the cavity of a hollow frame column. By inserting the tab of the clip into the groove of the connector, the connector may only be moved backward and forward over the length of the groove. Thus, the connector can be shifted to disconnect two modules, but after disassembly the connector remains attached to one of the modules. In this way, it is prevented that connectors would get lost, e.g. during disassembly of the temporary construction. Moreover, the tab and groove only allow for a translation of the connector in longitudinal direction, while blocking a rotational movement. In this way, the stopping elements constitute an alternative to the second set of locking elements, for stopping spinning of the connector and fixing its orientation in a connection hole.

Optionally, the back plate of any frame module is adapted to be clamped between the third and fourth set of locking elements, in extended condition of the third and fourth set of locking elements. In this case, each of the two columns is hollow, and the connector comprises a first, third and fourth set of locking elements. The spacing in longitudinal direction between the third and fourth set, and the thickness of the back plate of a frame module, is such that the back plate may be clamped between the third and fourth set of locking elements. In this way, when being held during transport or storage, the connector may be positioned such that it extends into the interior of the rectangular frame, and at least partly extends into the cavity of a frame column.

Optionally, the third longitudinal position and fourth longitudinal position are such that, when the sleeve is inserted in any of the holes and the back plate is clamped between the third and fourth set of locking elements, the rear outer end of the sleeve does not protrude beyond the outer surface of the front plate. Thus, the position of the third and fourth set of locking elements, and the sleeve length are such that, when the connector is held during transport or storage, the rear end of the sleeve does not protrude outside the front plate of the module column. In this way, the attached connector does not hinder the modules when being manipulated or stacked. On the other hand, it is preferred that the third and fourth set of locking elements are not too close to the rear outer end of the sleeve, thereby avoiding an excessive cantilever of the connector when being held by a frame module.

According to a third aspect of the present invention, the use of a connector is provided, the connector being according to the first aspect of the invention. The use concerns use of the connector for releasably connecting modules in a modular system for temporary constructions. In an embodiment, the use concerns use of the connector for releasably connecting frame modules in a modular system for temporary exhibition stands.

### Brief Description of the Drawings

Fig. 1 to Fig. 3 give a 3D view of a connector according to an embodiment of the invention.
Fig. 4 gives a 3D view of the internal mechanism of the connector, according to an embodiment of the invention.
Fig. 5, Fig. 6, Fig. 8 and Fig. 9 show a longitudinal cross section of the connector, according to an embodiment of the invention.
Fig. 7(a) and (b) give a front view of the connector, according to an embodiment of the invention.
Fig. 7(c) and Fig. 10 respectively give a 3D view of a locking element comprised in the first set of locking elements, and a 3D view of a locking element comprised in the third and fourth set of locking elements, according to an embodiment of the invention.
Fig. 11 gives a 3D view of a frame module, according to an embodiment of the invention.
Fig. 12 gives a front view of two frame modules, combined with an intersection of the two centrally positioned frame columns, according to an embodiment of the invention.
Fig. 13 gives a 3D view of two frame modules, connected by means of a connector, according to an embodiment of the invention.
Fig. 14 gives a cross section, according to an XZ plane, of two connected frame columns, together with a side view of a mounded connector, according to an embodiment of the invention.
Fig. 15 gives a cross section, according to an XY plane, of two connected frame modules, together with a top view of a mounded connector, according to an embodiment of the invention.
Fig. 16 illustrates the presence of blocking elements inside a frame column, according to an embodiment of the invention.
Fig. 17 gives a cross section, according to an XZ plane, of a frame column, together with a side view of a connector held by the frame module, according to an embodiment of the invention.
Fig. 18 gives a 3D view of a stopping clip, according to an embodiment of the invention.
Fig. 19 gives a 3D view of a stopping clip, mounted on a connector, according to an embodiment of the invention.
Fig. 20 gives a cross section, according to an XZ plane, of a frame column, together with a side view of a connector held by a stopping clip, according to an embodiment of the invention.

### Detailed Description of Embodiment(s)

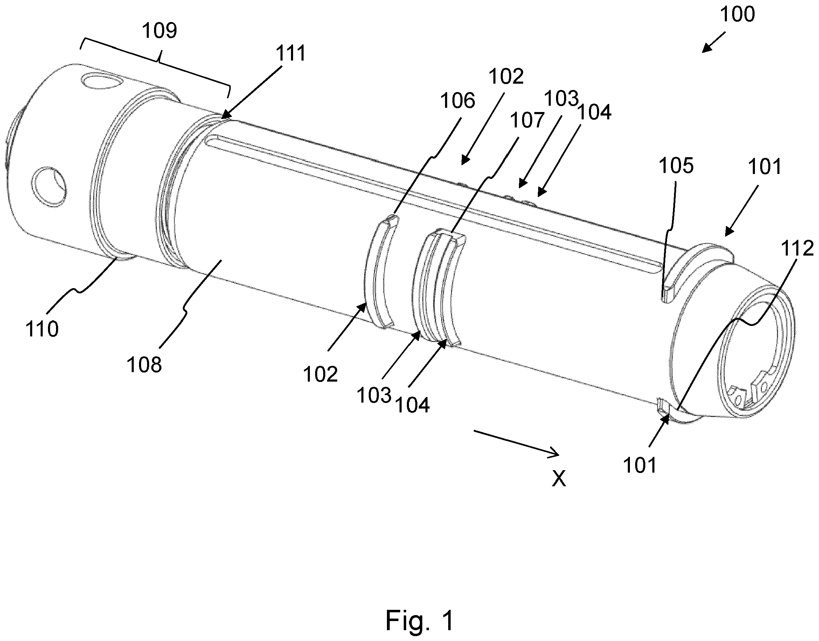

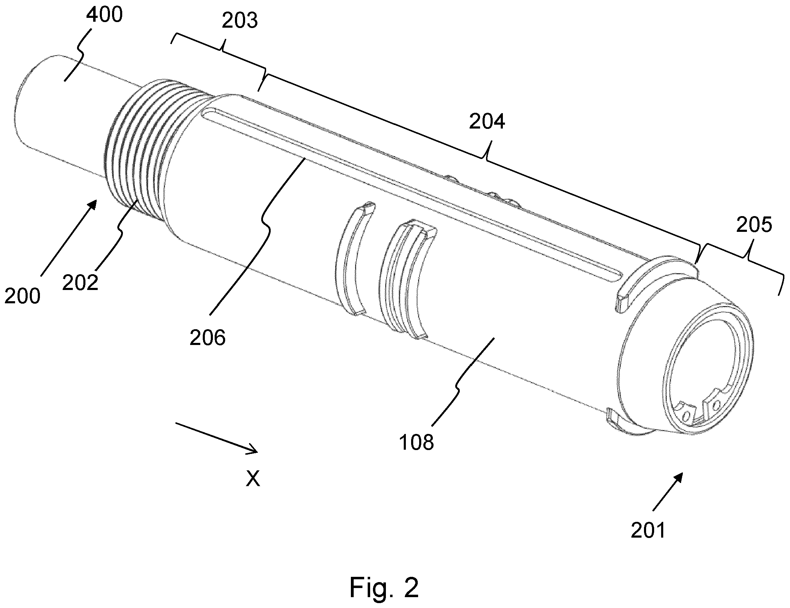

Fig. 1 to Fig. 3 show a connector 100 according to an embodiment of the invention. The connector 100 comprises a hollow sleeve 108, extending in longitudinal direction X, between a front outer end 200 and a rear outer end 201. An internal body 400 is placed inside the hollow sleeve 108, wherein some portion of the internal body 400 protrudes from the sleeve 108, at the front outer end 200. The internal body 400 is movable relative to the sleeve 108, in X direction. The connector 100 further comprises a head piece 109, which is screwed onto the front outer end 200 of the sleeve 108. For this purpose, screw thread 111 and 202 is provided on the head piece 109 and sleeve 108 respectively. The head piece 109 comprises a flat surface 110, serving as a front clamping surface. Fig. 2 shows the sleeve 108 without the head piece 109 being attached. The sleeve comprises a cylindrical central portion 204, provided with a longitudinal groove 206. The central portion 204 is positioned between a portion 203 at the front outer end 200, and a portion 205 at the rear outer end 201, the portion 205 having a conical shape. In the shown embodiment, the length of the sleeve 108, measured in X direction between outer ends 200 and 201 is 143 mm. The diameter of the central portion 204 of the sleeve 108 is 30 mm. The distance measured in X direction between the outer end of the internal body 400, on the left side of the figure, and the rear outer end 201 of the sleeve 108 is variable between 169 mm and 161 mm.

The sleeve 108 comprises two circumferential slits 105, 112 at a first longitudinal position. Each of the circumferential slits 105, 112 is an elongated opening, covering part of the circumference of the sleeve 108. The sleeve 108 comprises two circumferential slits at a second longitudinal position, of which only slit 106 is visible on Fig. 1. The circumferential slit 106 is an elongated opening, covering part of the circumference of the sleeve 108. The sleeve 108 comprises two circumferential slits at a third longitudinal position, of which only slit 107 is visible on Fig. 1. The circumferential slit 107 is an elongated opening, covering part of the circumference of the sleeve 108. As can be seen on the figure, slit 107 is broader than slits 105 and 106.

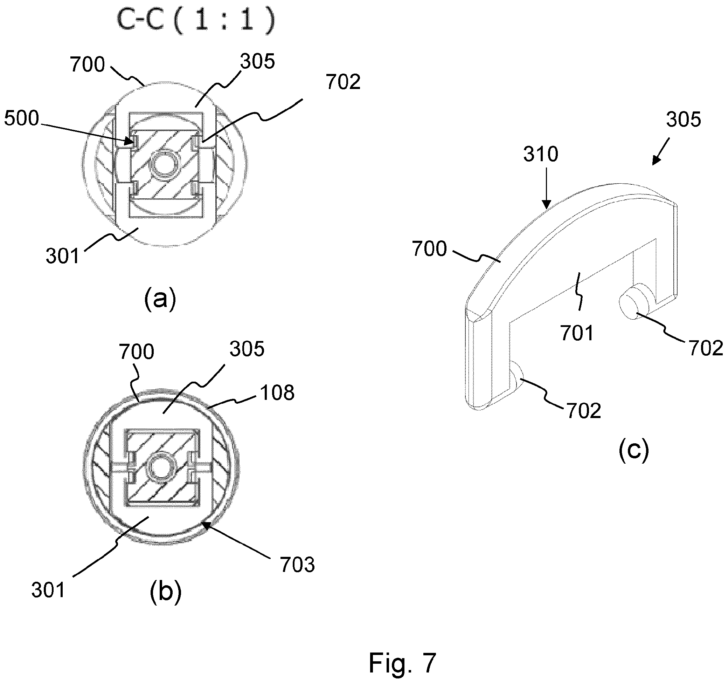

The connector 100 comprises a first set of locking elements 101, positioned at a first longitudinal position, close to the rear outer end 201. The first set of locking elements 101 consists of two separate locking elements 301 and 305, opposing each other in a transverse cross section. The locking element 301 is placed in the circumferential slit 112, and the locking element 305 is placed in the circumferential slit 105. The locking element 305 comprises a flat surface 310 situated in a transverse plane. A transverse plane is a plane perpendicular to the longitudinal direction X. The flat surface 310 faces the head piece 109. As can be seen on Fig. 7, the locking element 305 comprises a second opposing flat surface 701, parallel to the flat surface 310. The locking element 305 thus has two flat sides 301 and 701. Furthermore, the locking element 305 comprises a curved edge 700. The other locking element 301 of the first set 101 has an identical shape as the locking element 305.

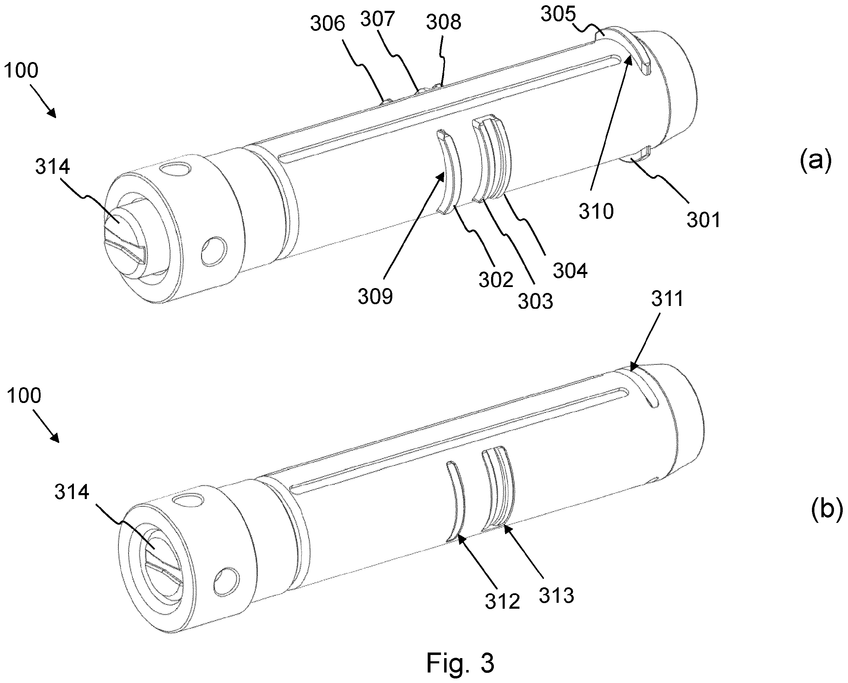

The connector 100 further comprises a second set of locking elements 102, positioned at a second longitudinal position, between the head piece 109 and the first set of locking elements 101. The second set of locking elements 102 consists of two separate locking elements 302 and 306, opposing each other in a transverse cross section. The locking element 302 is placed in the circumferential slit 106. Similarly, the locking element 306 is placed in a circumferential slit, the latter not visible on the figure. The locking elements 302 and 306 have a shape similar like the locking element 305. In particular, the locking elements 302 and 306 both have two opposing flat sides and a curved edge. With respect to locking element 302, the flat surface 309 situated in a transverse plane and facing the head piece 109 is indicated in Fig. 3. The locking element 302 of the second set 102 has an angular position rotated over 90 degrees relative to the locking element 301 of the first set 101. The locking element 306 of the second set 102 has an angular position rotated over 90 degrees relative to the locking element 305 of the first set 101.

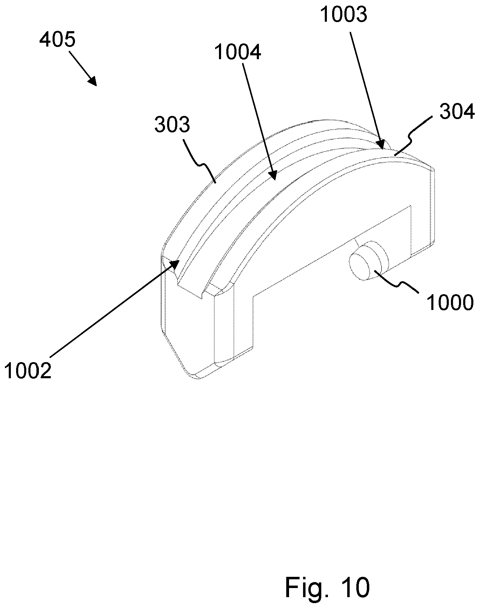

The connector 100 further comprises a third set of locking elements 103, positioned at a third longitudinal position, and a fourth set of locking elements 104, positioned at a fourth longitudinal position. The third and fourth longitudinal position are located between the first and second longitudinal position. The third set of locking elements 103 consists of two separate locking elements 303 and 307, opposing each other in a transverse cross section. The fourth set of locking elements 104 consists of two separate locking elements 304 and 308, opposing each other in a transverse cross section. The locking elements 303 and 304 are connected via an intermediate element 1004, as is visible from Fig. 10. Both the locking elements 303 and 304, and the intermediate element 1004 have a curved edge. The locking element 303 comprises a flat surface 1002 facing the other locking element 304. The locking element 304 comprises a flat surface 1003 facing the other locking element 303. Moreover, both locking elements 303 and 304 have two flat sides perpendicular to the longitudinal direction. The locking elements 303 and 304 together form a single element 405, placed in the wider circumferential slit 107. The design of locking elements 307 and 308 is identical to the locking elements 303 and 304. The element 405 has an angular position rotated over 90 degrees relative to the locking element 301 of the first set 101. The element 307-308 of the third/fourth set 103-104 has an angular position rotated over 90 degrees relative to the locking element 305 of the first set 101. In the shown embodiment, the element 405 has the same angular position as the locking element 302 of the second set, and the element 307-308 has the same angular position as the locking element 306 or the second set. In other words, the third, fourth and second set of locking elements all have the same orientation with respect to the sleeve 108, while the first set has an orientation rotated over 90 degrees.

Fig. 3 further shows that the connector 100 comprises a push button 314. In Fig. 3(b), the button 314 is pushed and all the locking elements 101-104 are in the collapsed or retracked condition. In collapsed condition, the locking elements 101-104 are recessed in the sleeve 108, thus not protruding outside the sleeve's outer surface, as is also clear from Fig. 7(b), Fig. 6 and Fig. 9. In this condition, the connector may be inserted through connection holes of adjacent modules, as will be further explained underneath. In Fig. 3(a), the button 314 is released, and all the locking elements 101-104 are in the extended condition. In extended condition, the locking elements 101-104 protrude outside the sleeve's outer surface, as is also clear from Fig. 7(a), Fig. 5 and Fig. 8. In this condition, the module columns are clamped between the flat surface 110 of the head piece 109 and the protruding flat surfaces 310 of the first set of locking elements 101, as will be further explained underneath.

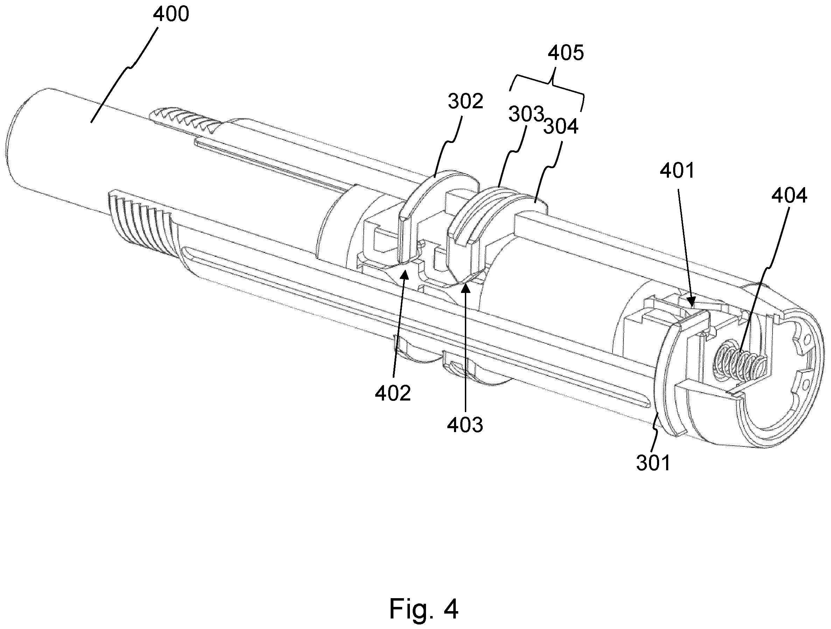

Fig. 4 to Fig. 10 illustrates the internal mechanism of the connector 100, for moving the locking elements 101-104 between the extended and collapsed condition and vice versa. The connector 100 comprises an internal body 400, movable in longitudinal direction X by means of the push button 314. The connector 100 further comprises a spring 404, placed inside the sleeve 108, at its rear outer end 201. When the internal body 400 is moved to the right in the figure, by pushing the button 314, the spring 404 is compressed. Moving the internal body 400 to the right in the figure, implies that the portion of the internal body 400 that is inside the hollow sleeve 108, moves towards the rear outer end 201 of the sleeve 108. When releasing the push button 314, the internal body 400 is displaced towards the left in the figure, due to the spring force generated by the compressed spring 404. Moving the internal body 400 to the left in the figure, implies that the portion of the internal body 400 that is inside the hollow sleeve 108, moves towards the front outer end 200 of the sleeve 108.

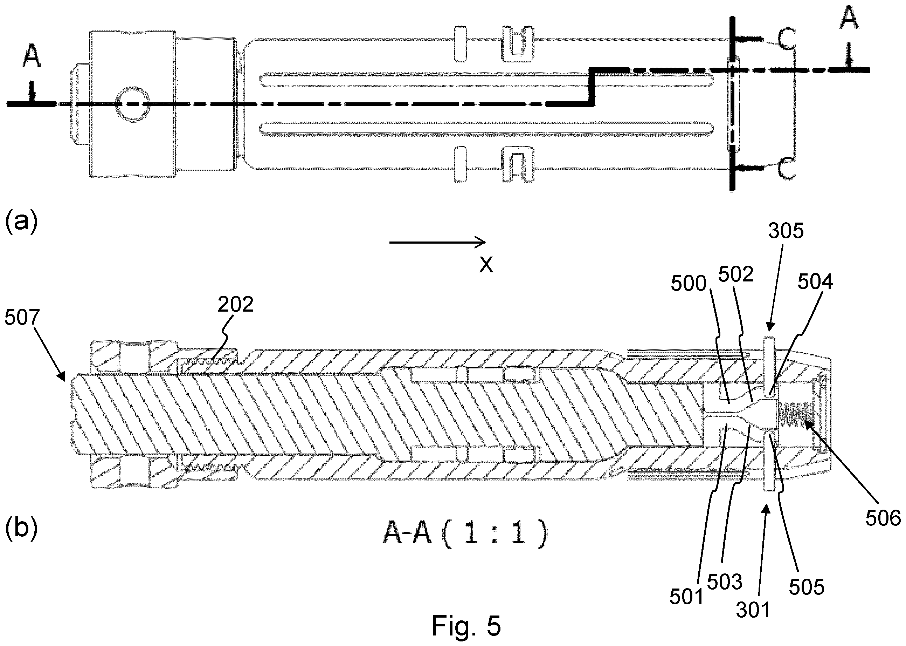

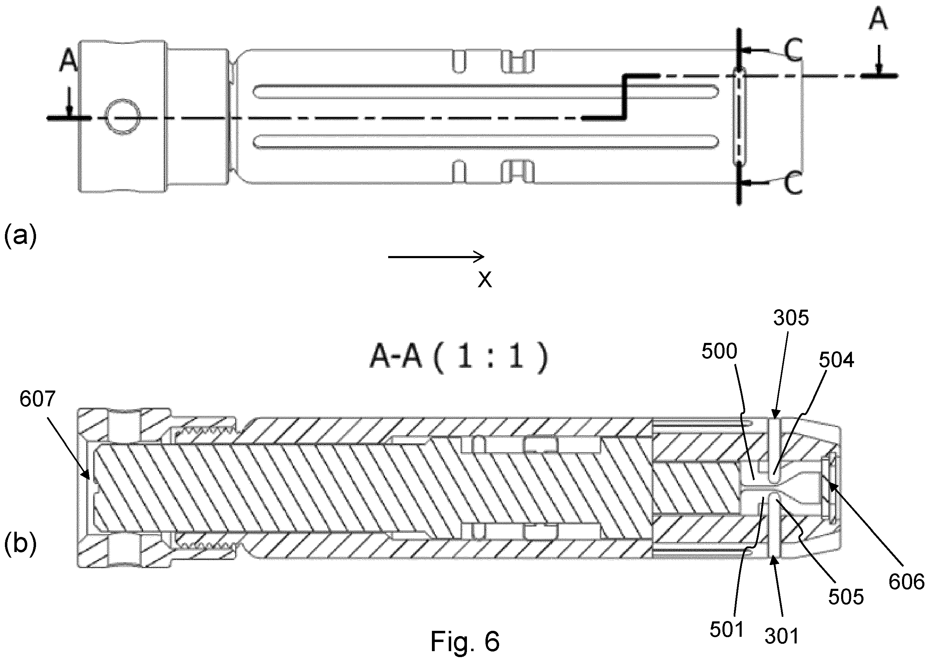

The connector 100 comprises a first linear cam assembly 401, second linear cam assembly 402, and third linear cam assembly 403, for moving the locking elements of the first 101, second 102 and third-fourth set 103-104 respectively. As shown in Fig. 5 and Fig. 6, the first linear cam assembly 401 comprises a cam element 500 and follower 504, composing a linear cam for moving locking element 305, and a cam element 501 and follower 505, composing a linear cam for moving locking element 301. The cam element 500 is provided as a recess or groove in the internal body 400, having a ramp or inclined surface 502 ending at a flat tail. The ramp 502 is inclined with respect to the longitudinal direction X and with respect to a transverse plane. The follower 504 is in contact with the cam element 500 and is adapted to ride on the ramp surface 502. In particular, the follower 504 comprises two pins 702, visible on Fig. 7, adapted to guide the follower 504 in the groove 500. The follower 504 makes part of the locking element 305, thus being adapted to move the locking element 305 upwards and downwards relative to the sleeve 108.

This changing position of the locking elements 305, 301 is illustrated in Fig. 5 and Fig. 6. In Fig. 5, the push button 314 is released, see 507, and the locking elements 305, 301 are in extended condition. The spring 404 is in a partly compressed condition, see 506. In Fig. 6, the push button 314 is pressed, see 607, and the locking elements 305, 301 are in collapsed condition. The spring 404 is in a fully compressed condition, see 606. Changing the position of the internal body 400 from Fig. 5 to Fig. 6, causes the cam elements 500, 501 to move towards the right on the figure. Accordingly, by riding on the ramp 502, 503, the followers 504, 505, are translated in a transverse plane, these translations each being perpendicular to the longitudinal direction X, and the locking elements 305, 301 are recessed in the sleeve 108. Similarly, when changing the position of the internal body 400 from Fig. 6 to Fig. 5, under the spring force, the followers 504, 505 move upwards with respect to the sleeve 108, thereby bringing the locking elements 301, 305 in extended condition.

Fig. 7(a) gives a front view corresponding to Fig. 5, in extended condition of the locking elements 301, 305. Fig. 7(b) gives a front view corresponding to Fig. 6, in collapsed condition of the locking elements 301, 305. Fig. 7 (a) and (b) show that the curved edge 700 of the locking element 305 correspond to a circular arc. Fig. 7(b) shows that, in collapsed condition, the curved edge 700 lies on a circle 703 which is concentric with the circular cross section of the sleeve 108. Fig. 7(b) further shows that the circular arc of edge 700 corresponds to about a quarter of a full circle, thereby providing a sufficiently large clamping surface of a locking element, while allowing the locking element to be retracked inside the sleeve. Similarly, the other locking elements of the first, second, third and fourth set also have a circular edge corresponding to about a quarter of a full circle.

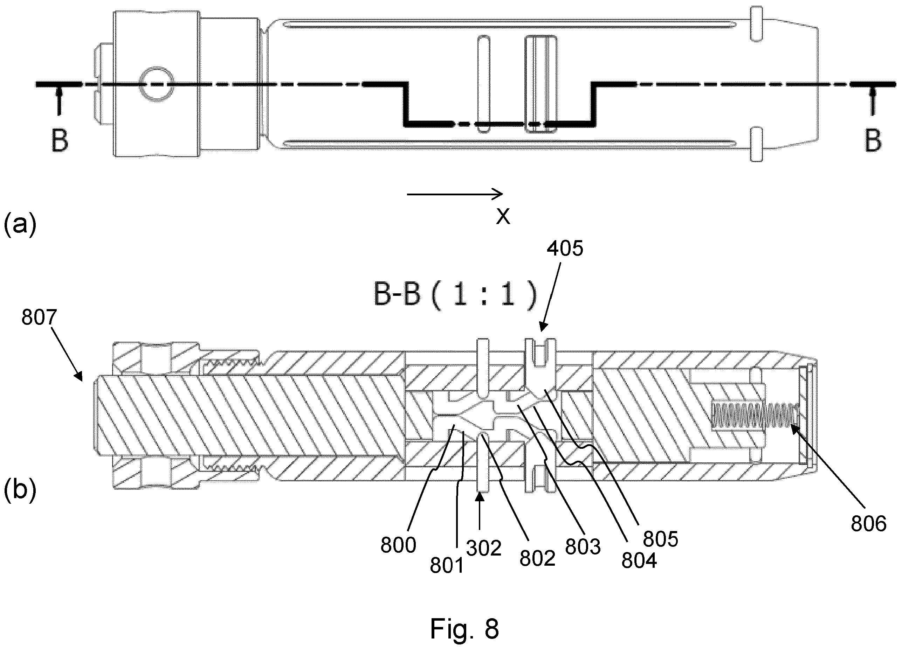

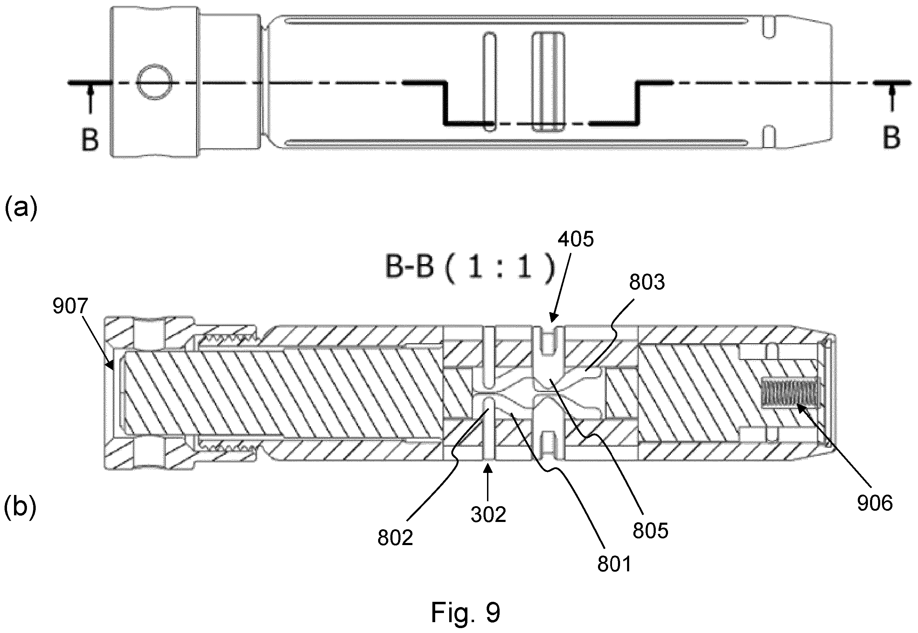

The second linear cam assembly 402 and third linear cam assembly 403 operate in a similar way as the first linear cam assembly 401. As shown in Fig. 8 and Fig. 9, the second linear cam assembly 402 comprises a cam element 800 and follower 802. The cam element 800 is provided as a recess or groove in the internal body 400, having a ramp or inclined surface 801. The ramp 801 is inclined with respect to the longitudinal direction X and with respect to a transverse plane. The follower 802 makes part of locking element 302. Similar to locking element 305, locking element 302 comprises pins 702 adapted to guide the follower 802 in the groove 800.

Furthermore, the third linear cam assembly 403 comprises a cam element 803 and follower 805. The cam element 803 is provided as a recess or groove in the internal body 400, having a ramp or inclined surface 804. The ramp 804 is inclined with respect to the longitudinal direction X and with respect to a transverse plane. The follower 805 makes part of locking element 405. Fig. 10 shows that locking element 405 comprises pins 1000 adapted to guide the follower 805 in the groove 803.

In Fig. 8, the push button 314 is released, see 807, and the locking elements 302, 405 are in extended condition. The spring 404 is in uncompressed condition, see 806. In Fig. 9, the push button 314 is pressed, see 907, and the locking elements 302, 405 are in collapsed condition. The spring 404 is in a partly compressed condition, see 906. Changing the position of the internal body 400 from Fig. 8 to Fig. 9, causes the locking elements 302, 405 to be translated in a transverse plane, according to a direction perpendicular to the X direction, thereby being recessed in the sleeve 108. Similarly, when changing the position of the internal body 400 from Fig. 9 to Fig. 8, under the spring force, the locking elements 302, 405 are brought in extended condition.

In the state of Fig. 8, the spring 404 is fully uncompressed, not exerting any resilient force. All locking elements are then in the extended condition. When pushing the button 314, the state changes from Fig. 8 to Fig. 9, and next to Fig. 5 and Fig. 6, thereby gradually compressing the spring 404. As first the state of Fig. 9 is reached, the locking elements of the second set 102, third set 103 and fourth set 104 are recessed first. Only after some delay, when the state of Fig. 6 is reached, also the locking elements of the first set 101 are recessed. Thus, the linear cam assemblies are positioned and designed in such a way that pushing the button 314 results in a sequential translation of the locking elements, wherein the first set 101 is recessed last. Similarly, when releasing the pushing button 314, the first set of locking elements 101 is extended first, followed by extending the other locking elements after some delay. In this way, it is ensured that the locking elements of the first set 101 will always arrive at their extended position, even if one of the other elements would be hindered from extending.

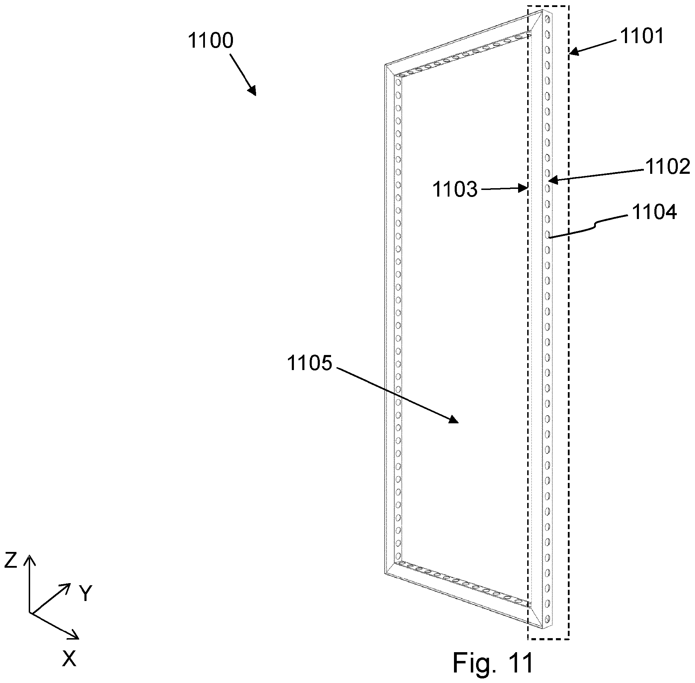

Fig. 11 gives an example of a frame module 1100, extending in longitudinal direction X, transverse direction Y and height direction Z. The frame module 1100 has a rectangular frame, composed of four mutually connected columns, delimiting a central opening 1105. One such column is indicated in the figure as 1101. The face of the column 1101 parallel to the YZ plane and facing the central opening 1105 is referred to as the back face 1103 of the column 1101. The face of the column 1101 parallel to the YZ plane and opposing the back face 1103, is referred to as the front face 1102 of the column 1101. Connection holes 1104 extend in longitudinal direction between the back face 1103 and front face 1102.

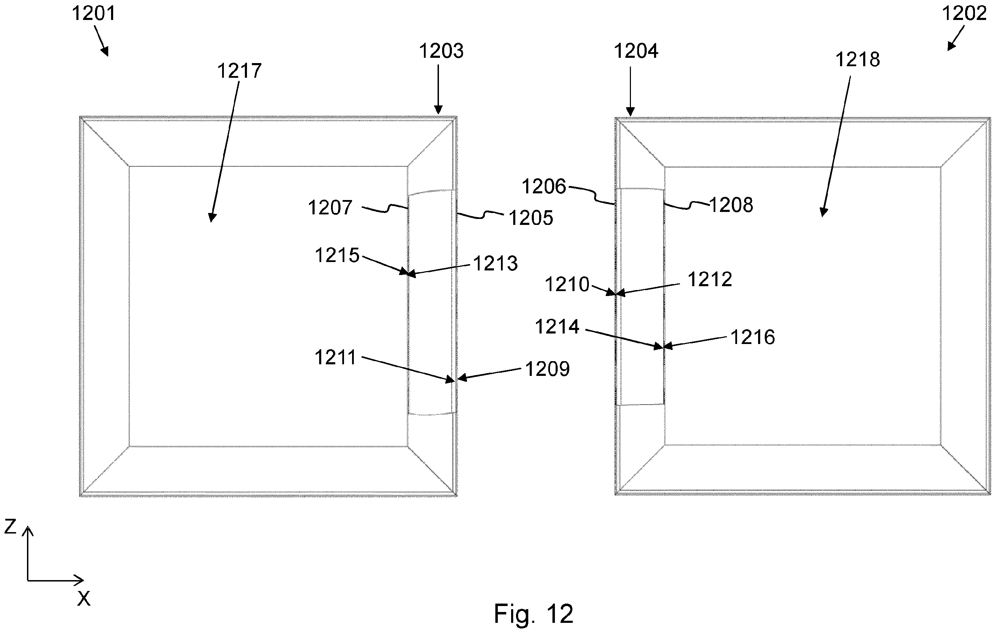

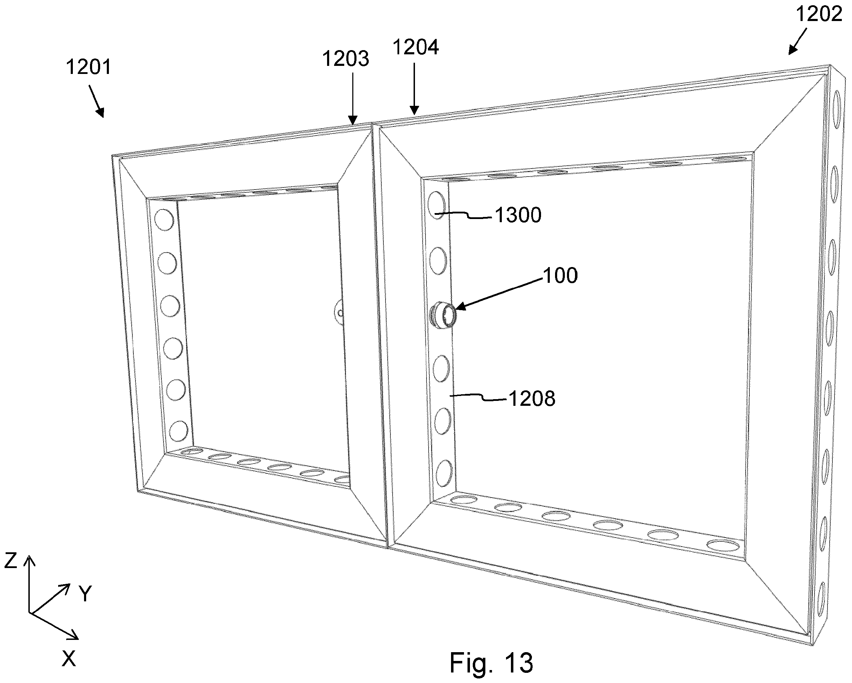

Fig. 12 gives a front view of two frame modules 1201, 1202, each of them having a square frame and central opening 1217, 1218. The frame module 1201 comprises a hollow column 1203, and the frame module 1202 comprises a hollow column 1204. Centrally on Fig. 12, an intersection of both columns 1203, 1204 is shown. Fig. 13 gives a 3D view of these frame modules 1201, 1202, in connected condition.

The hollow column 1203 comprises a back plate 1207, being the plate next to the central opening 1217. The back plate 1207 has an outer surface 1215 facing the central opening 1217, and an inner surface 1213 facing the internal cavity of the column 1203. The outer surface 1215 of the back plate 1207 corresponds to the back face of the column 1203. Moreover, the hollow column 1203 comprises a front plate 1205, being the plate at the outer limit of the frame module. The front plate 1205 has an outer surface 1209 facing the exterior, and an inner surface 1211 facing the internal cavity of the column 1203. The outer surface 1209 of the front plate 1205 corresponds to the front face of column 1203. Both the back plate 1207 and front plate 1205 comprises a series of holes 1300, wherein a hole of the back plate is aligned to a hole of the front plate.

Similarly, the hollow column 1204 comprises a back plate 1208, being the plate next to the central opening 1218. The back plate 1208 has an outer surface 1216 facing the central opening 1218, and an inner surface 1214 facing the internal cavity of the column 1204. Moreover, the hollow column 1204 comprises a front plate 1206, being the plate at the outer limit of the frame module. The front plate 1206 has an outer surface 1210 facing the exterior, and an inner surface 1212 facing the internal cavity of the column 1204.

Fig 13. shows the connector 100 in mounted condition, wherein the sleeve 108 extends through the holes 1300. In the shown embodiment, the holes 1300 have a diameter of 31 mm. Before being inserted into the holes 1300, the push button 314 is pressed, thereby collapsing all the locking elements, such that the connector can be inserted through the holes 1300. Next, the push button 314 is released, thereby bringing the locking elements in the extended condition.

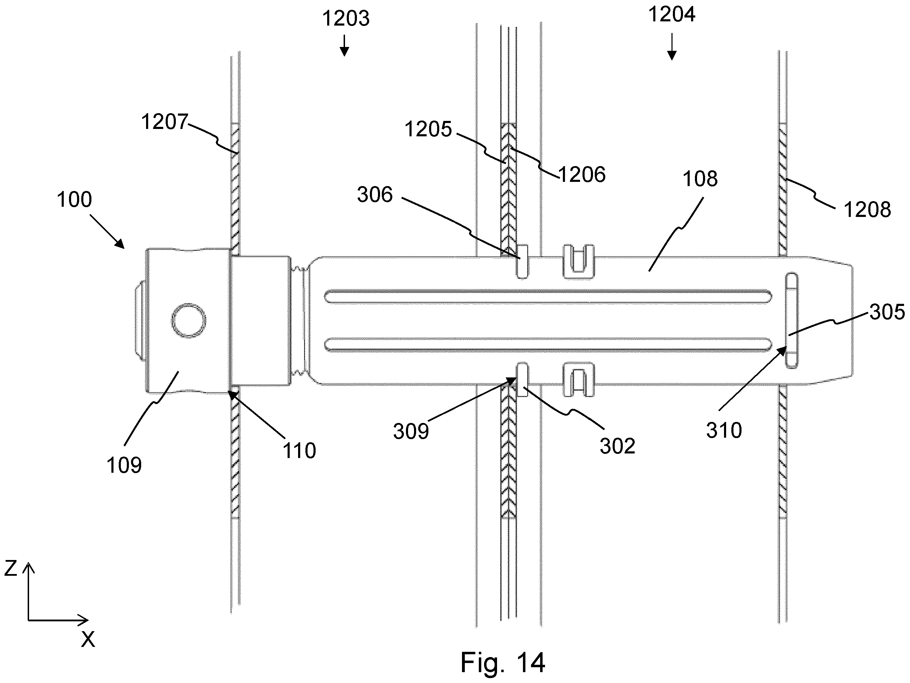

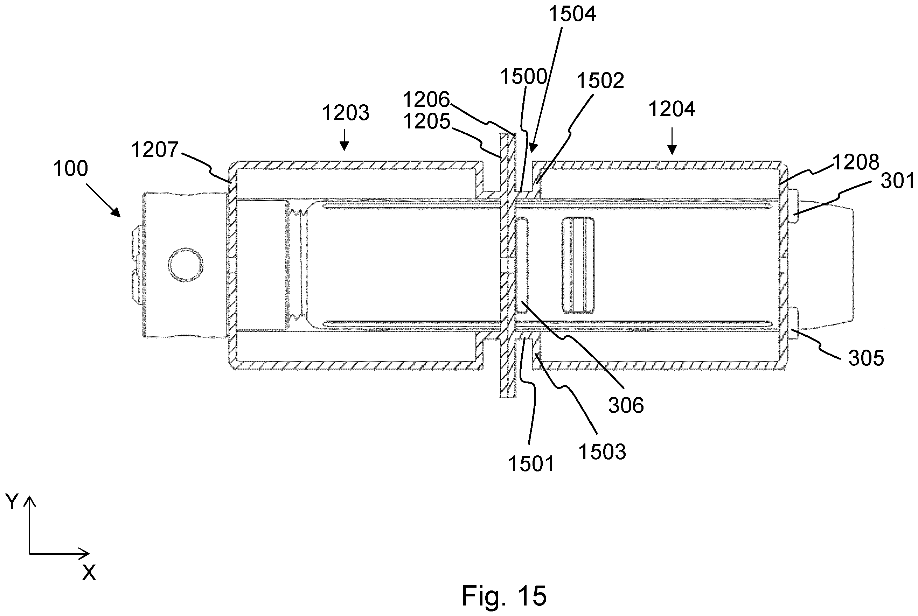

Fig. 14 and Fig. 15 show that in connected condition, the front plates 1205 and 1206 of both modules are pushed together: the outer surface 1209 of front plate 1205 is in contact with the outer surface 1210 of the front plate 1206. Moreover, the figures show that the connector 100 clamps at the back plates 1207, 1208 of both columns 1203, 1204. In this, the flat surface 110 of the head piece 109 serves as a first clamping surface, being in contact with the outer surface 1215 of the back plate 1207. The flat surfaces 310, provided by the first set of locking elements 101, serve as a second clamping surface, being in contact with the outer surface 1216 of the back plate 1208. In this way, the module columns 1203, 1204 are clamped between flat clamping surfaces 110, 310, thereby providing for an even distribution of stresses in the back plates, and offering an increased resistance against tensile loads. Moreover, due to the substantial length of the connector 100, it crosses both columns 1203 and 1204, thereby providing an increased resistance against torsion loads.

After placing the connector 100, its clamping length may be adjusted, by turning the head piece 109. Indeed, due to the screw thread 111 and 202, the head piece may be moved in longitudinal direction, thereby displacing the clamping surface 110. In this way any clearances or tolerances may be compensated for. In the shown embodiment, the width of a column 1203, measured in X direction, between the outer surface 1215 of the back plate 1207 and the outer surface 1209 of the front plate 1205 is 65,5 mm. The clamping length, measured in X direction, between the flat surfaces 110 and 310 is thus in the order of 131 mm, and may be slightly adapted by screwing the head piece 109.

Fig. 14 and Fig. 15 further show that, in connected condition, the locking elements 306, 309 of the second set 102, are positioned close to the inner surface 1212 of the front plate 1206 of column 1204. Thus, the back plate 1207 of the column 1203 and the front plate 1206 of the other column 1204 are positioned between the head clamping surface 110 defined by the head piece 109 and the central clamping surface 309 defined by the second set of locking elements 102. In the shown embodiment, the locking elements 306, 309 are not in direct contact with the front plate 1206, but are positioned at about 0,5 mm from the front plate. Thus, under normal conditions, clamping of the modules merely relies on the first set of locking elements 101, while the second set 102 does not contribute to clamping the columns 1203, 1204. However, as soon as some impact happens, the locking elements 306, 309 will come into contact with the front plate 1206, thereby contributing to clamping and impeding release of the connector 100. Therefore, it is advantageous that also the locking elements of the second set 102 have a flat surface 309.

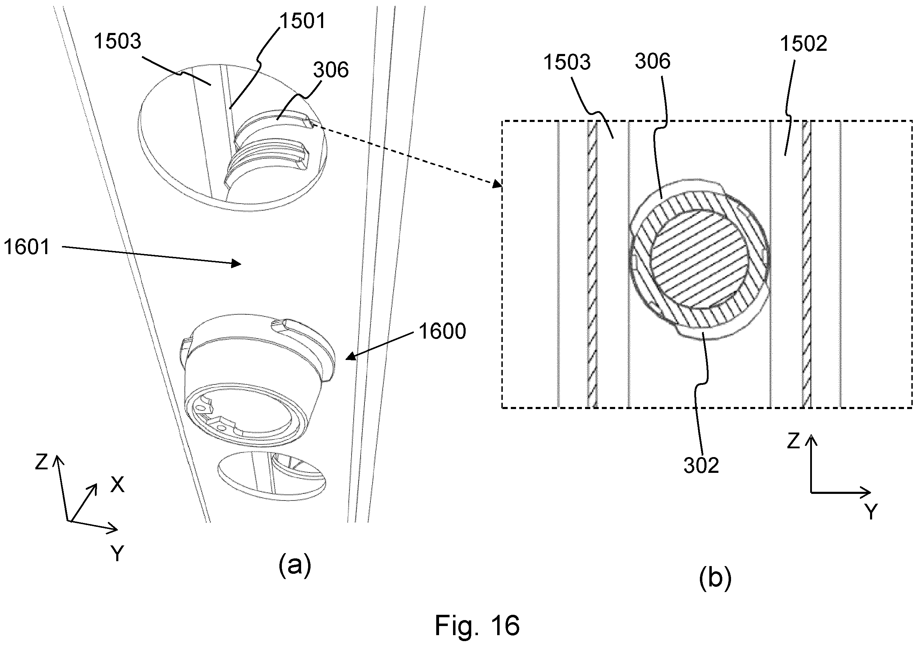

Fig. 15 and Fig. 16 show that every module column 1203, 1204 comprises blocking elements 1500, 1501. Indeed, a straight edge 1500 is attached to the inner surface 1212 of the front plate 1206 and protrudes from this inner surface 1212. The straight edge 1500 extends in height direction, and is parallel to the longitudinal direction X and parallel to the height direction Z. Another straight edge 1502, being parallel to the transverse direction Y and to the height direction Z, is attached to edge 1500. Both edges 1500 and 1502 together form a step inside the cavity of column 1204. The step exists due to a groove 1504 extending in height direction Z, at the outside of the column 1204. Similarly, an internal step is formed at the opposing side, by means of the edges 1501 and 1503. Fig. 16 shows that when the connector 100 is rotated around its axis, the locking elements 302, 306 of the second set 102 bump into the edges 1501 and 1500, thereby blocking a further rotation of the connector 100.

Thus, while rotation of the connector 100 is blocked by means of the blocking elements 1501, 1500, the head piece 109 can easily be turned for adjusting the clamping length. Moreover, in this way, the second set of locking elements 102 together with the blocking elements 1500, 1501, determine a preferred orientation of the connector 100 in the hole 1300. Indeed, Fig. 16 shows that due to the blocking, clamping by the locking elements of the first set 101 happens at the part 1600 of the back plate close to the corner of the column, not at the part 1601 intermediate between two connection holes 1300. This is due to the fact that the locking elements of the first set 101 are rotated over 90 degrees compared to the locking elements of the second set 102. Clamping at the portions 1600 is advantageous, because the portions 1600 close to the column corners have an increased strength compared to the intermediate portions 1601.

Finally remark that because of the presence of the blocking elements 1500, 1501, it may happen that the locking elements of the second set 102 do not extend immediately after releasing the push button 314. For this reason, the above explained delay is implemented with respect to the linear cam assemblies, ensuring that the first set of locking elements 101 always extend first.

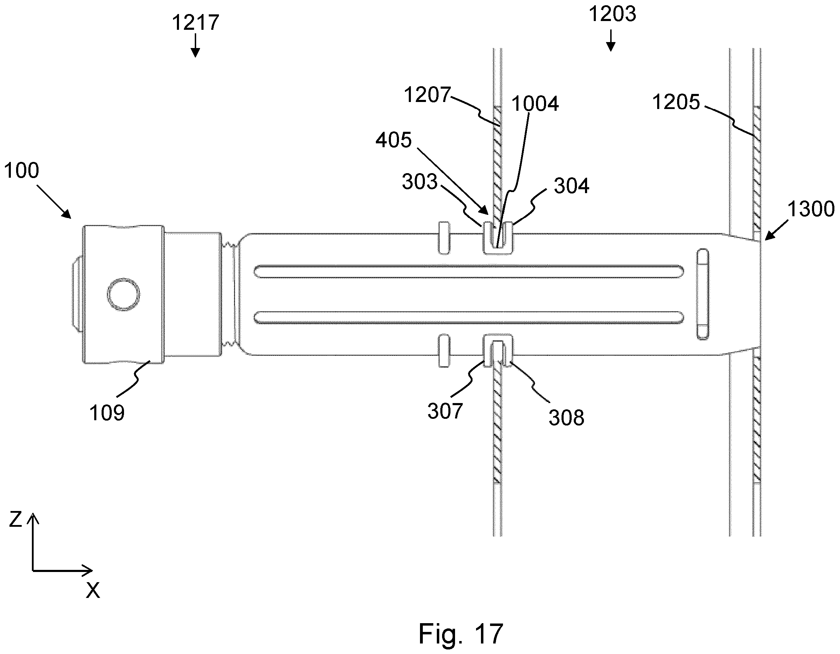

Fig. 17 illustrates how the connector 100 can be held by an individual frame module 1201, by means of the locking elements of the third and fourth set 103, 104. In this state, the modules with attached connector 100 may be stored or transported, after disassembly of the temporary construction. Fig. 17 shows that the back plate 1207 of column 1203 is clamped between the locking elements 303, 307 and 304, 308, the locking elements being in extended condition. In particular, the back plate 1207 is clamped between the flat surfaces 1002 and 1003 of the locking elements 405. Moreover, when being clamped, the inner circumference of the hole 1300 is clamped against the intermediate element 1004, thereby ensuring increased stability of the connector 100 during transport.

Fig. 17 further sows that in the transport or storage state, the front end of the connector 100, with attached head piece 109, extends into the central opening 1217 of the module 1201. Moreover, the rear end of the connector, having the conical end, is positioned inside the internal cavity of the column 1203. Thus, it does not protrude beyond the outer surface 1209 of the front plate 1205. In particular, the third and fourth set of locking elements 103, 104 are positioned in such a way that, on the one hand, the rear outer end of the connector does not protrude beyond the front plate 1205, and, on the other hand, the connector length positioned inside the central opening 1217 is relatively limited. In this way, the attached connector 100 does not hinder manipulation or stacking of the modules, while at the same time excessive cantilever of the connector during transport or storage is avoided.

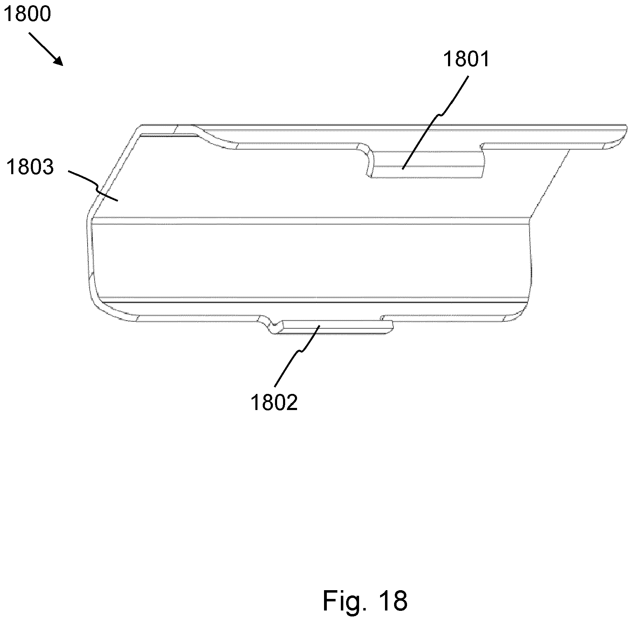

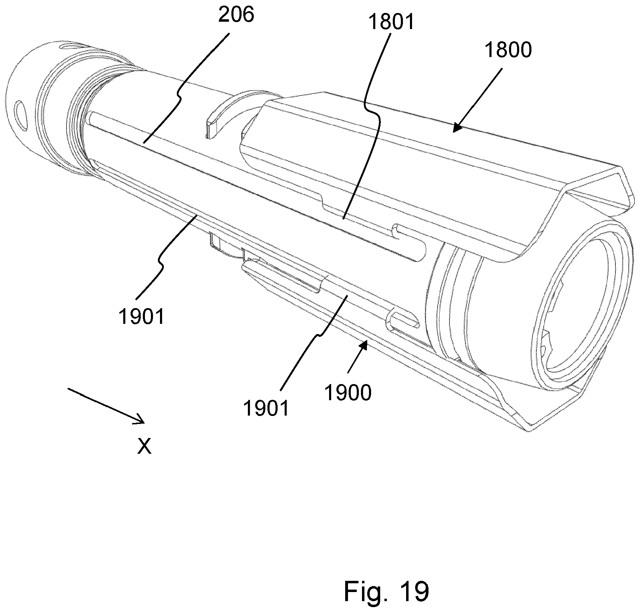

Fig. 18 to Fig. 20 illustrate how stopping clips 1800, 1900 may be used in combination with the connector 100. Fig. 18 gives a 3D view of a stopping clip 1800. The stopping clip 1800 comprises a surface 1803, with on both sides a tab 1801 and 1802 respectively. Fig. 19 shows that the sleeve 108 comprises two longitudinal grooves 206 and 1901 at its outer surface. Two additional grooves are provided at the other side of the sleeve 108, not being visible on Fig. 19. The grooves 206 and the tabs 1801 are such that a tab 1801 can be inserted into a groove 206. In this way, a tongue and groove connection is formed between the stopping clip 1800 and the sleeve 108, wherein the connector may be displaced in longitudinal direction X, but a rotation of the connector is blocked. The connector 100 may be displaced in longitudinal direction over the length of groove 206, between the outer ends 2000, 2001 of the groove 206.

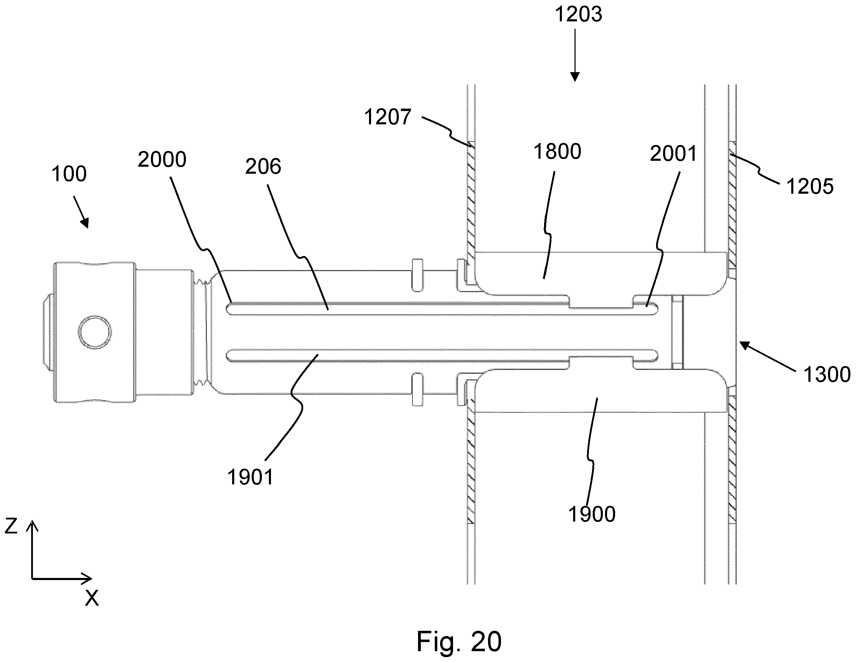

Fig. 20 shows that the two stopping clips 1800, 1900 may be placed inside the cavity of a column 1203, via a connection hole 1300. Via the tabs 1801, 1901 engaging with the grooves 206, 1901, the connector 100 is attached to the frame module 1201; the connector may only be shifted in longitudinal direction over the length of the grooves 206, 1901, and cannot be detached from the module. In Fig. 20, the connector is in the transport or storage state, as is the case in Fig. 17, wherein the front plate 1207 is clamped by the locking elements of the third and fourth set 103, 104. Thus, after disassembly, the connector 100 remains attached to the frame module 1201, thereby preventing that connectors would get lost after disassembly. On the other hand, while being positioned between the stopping clips 1800, 1900, the connector may be shifted in longitudinal direction when the locking clips are collapsed, thereby allowing to connect the module 1201 to another module 1202. In connected condition of modules 1201, 1202, the stopping clips 1800, 1900 prevent that the connector 100 is rotated around its axis. In this way, the stopping clips ensure a preferred orientation of the connector in the hole 1300. Therefore, the use of stopping clips 1800, 1900 may be an alternative to the second set of locking elements 102 in combination with blocking elements 1500, 1501, as was explained with respect to Fig. 15-16.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning of the claims are therefore intended to be embraced therein. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Connector (100) for releasably connecting two modules (1201, 1202) in a modular system for temporary constructions, wherein the connector (100) comprises:
- a sleeve (108) extending in longitudinal direction between a front (200) and rear outer end (201), the sleeve (108) comprising one or more circumferential slits (105, 112) at a first longitudinal position;
- a head piece (109) adapted to be attached to the front outer end (200) of the sleeve (108), the head piece (109) comprising a flat surface (110), in attached condition defining a front clamping surface situated in a transverse plane and facing the sleeve (108);
- a first set of one or more locking elements (101), of which each locking element (301, 305) comprises a flat surface (310), wherein the one or more locking elements of the first set (101) are placed in the one or more circumferential slits (105, 112) at the first longitudinal position and are movable between
∘ a collapsed condition, wherein the locking elements (301, 305) are at least partially recessed in the sleeve (108), and
∘ an extended condition, wherein the locking elements (301, 305) protrude from the sleeve (108), such that the associated protruding flat surfaces together define a rear clamping surface situated in a transverse plane and facing the front clamping surface,
the connector (100) being adapted to clamp two module parts (1203, 1204) between the front and rear clamping surface in extended condition of the first set of locking elements (101), after being inserted through corresponding holes (1300) in the module parts (1203, 1204) in collapsed condition of the first set of locking elements (101).

2. Connector (100) according to claim 1,
wherein any locking element (301, 305) of the first set (101) comprises a curved edge (700) facing away from the sleeve (108).

3. Connector (100) according to any of the preceding claims,
wherein the head piece (109) and the front outer end (200) of the sleeve (108) both comprise screw thread (111, 202), such that the head piece (109), by being screwed, is movable in longitudinal direction, thereby allowing to adapt the distance between the front and rear clamping surface.

4. Connector (100) according to any of the preceding claims,
wherein the connector (100) further comprises:
- an internal body (400), placed at least partially inside the sleeve (108) and moveable in longitudinal direction,
- a first linear cam assembly (401), comprising, per locking element (301, 305) of the first set (101):
∘ a cam element (500), comprising a ramp (502) which is inclined with respect to the longitudinal direction;
∘ a follower (504), in contact with the cam element (500) and being adapted to ride on the ramp surface (502), such that moving the cam element (500) in longitudinal direction causes the follower (504) to be moved according to a translation perpendicular to the longitudinal direction,
wherein any cam element (500, 501) of the first linear cam assembly (401) is comprised in the internal body (400), and any follower (504, 505) of the first linear cam assembly (401) is comprised in a locking element (301, 305) of the first set (101), thereby allowing for a translation of any locking element (301, 305) of the first set according to a direction perpendicular to the longitudinal direction, by moving the internal body (400) in longitudinal direction.

5. Connector (100) according to any of the preceding claims,
wherein:
- the sleeve (108) comprises one or more openings (106) at a second longitudinal position, located between the first longitudinal position and the front outer end (200);
- the connector (100) comprises a second set (102) of one or more locking elements, wherein the one or more locking elements (302, 306) of the second set (102) are placed in the one or more openings (106) of the sleeve (108) at the second longitudinal position, and are movable between
∘ a collapsed condition, wherein the locking elements (302, 306) are at least partially recessed in the sleeve (108), and
∘ an extended condition, wherein the locking elements (302, 306) protrude from the sleeve (108).

6. Connector (100) according to claim 5,
wherein:
- each of the openings (106) at the second longitudinal position is a circumferential slit (106), and
- each of the locking elements (302, 306) of the second set (102) comprises a flat surface (309), such that in the extended condition, the associated protruding flat surfaces together define a central clamping surface situated in a transverse plane and facing the front clamping surface.

7. Connector (100) according to claim 5 or 6,
wherein any locking element (302, 306) of the second set (102) has an angular position rotated over 90 degrees relative to one of the locking elements (301, 305) of the first set (101).

8. Connector (100) according to claim 5 to 7,
wherein the connector (100) further comprises a second linear cam assembly (402), comprising, per locking element (302, 306) of the second set (102):
- a cam element (800), comprising a ramp (801) which is inclined with respect to the longitudinal direction;
- a follower (802), in contact with the cam element (800) and being adapted to ride on the ramp surface (801), such that moving the cam element (800) in longitudinal direction causes the follower (802) to be moved according to a translation perpendicular to the longitudinal direction,
wherein any cam element (800) of the second linear cam assembly (402) is comprised in the internal body (400), and any follower (802) of the second linear cam assembly (402) is comprised in a locking element (302) of the second set (102), thereby allowing for a translation of any locking element (302, 306) of the second set according to a direction perpendicular to the longitudinal direction, by moving the internal body (400) in longitudinal direction,
and wherein the longitudinal position of the one or more cam elements (500) of the first linear cam assembly (401), and the longitudinal position of the one or more cam elements (800) of the second linear cam assembly (402), is such that moving the internal body (400) in longitudinal direction causes the locking elements of the first (101) and second set (102) to be translated sequentially.

9. Connector (100) according to any of the preceding claims, wherein:
- the sleeve (108) comprises one or more openings (107) at a third longitudinal position, and comprises one or more openings (107) at a fourth longitudinal position, the third and fourth longitudinal position both located between the first longitudinal position and the front outer end (200);
- the connector (100) comprises a third (103) and a fourth set (104) of one or more locking elements, wherein the one or more locking elements (303, 307; 304, 308) of the third (103) respectively fourth set (104) are placed in the one or more openings (107) of the sleeve (108) at the third respectively fourth longitudinal position and are movable between
∘ a collapsed condition, wherein the locking elements (303, 307; 304, 308) are at least partially recessed in the sleeve (108), and
∘ an extended condition, wherein the locking elements (303, 307; 304, 308) protrude from the sleeve (108),
the connector (100) being adapted to clamp a module plate (1207) between the locking elements of the third set (103) and the locking elements of the fourth set (104), in extended condition of the third and fourth set of locking elements, thereby allowing to releasably attach the connector (100) to a module (1201).

10. Connector (100) according to claim 9, wherein:
- each of the openings (107) at the third longitudinal position and each of the openings (107) at the fourth longitudinal position is a circumferential slit (107);
- each of the locking elements of the third (103) and fourth set (104) comprises a flat surface (1002, 1003), such that in extended condition of both the third (103) and fourth set (104) of locking elements, the associated protruding flat **surfaces** together define a pair of holding surfaces situated in a transverse plane and facing each other,
and wherein:
- any of the one or more circumferential slits at the third longitudinal position forms, together with a corresponding circumferential slit at the fourth longitudinal position, a single circumferential slit (107) extending between the third and fourth longitudinal position, and
- any locking element of the third set (303) is connected to a corresponding locking element (304) of the fourth set by an intermediate element (1004), wherein each of the one or more intermediate elements (1004) comprises a top surface facing away from the sleeve and being parallel to the longitudinal direction,
the connector (100) being adapted to clamp a module plate (1207) between both holding surfaces, thereby allowing to releasably attach the connector (100) to a module (1201).

11. System for releasably connecting frame modules (1201, 1202) in a modular system for temporary constructions, the system comprising:
- at least one connector (100) according to any of the preceding claims;
- at least two frame modules (1201, 1202), wherein the first (1201) and second frame module (1202) each comprise at least one column (1203, 1204), wherein
∘ any column (1203) has a flat back face (1215) and flat front face (1209) extending in height direction and transverse direction;
∘ any column (1203) comprises one or more holes (1300) extending in longitudinal direction between the back and front face, and
wherein the connector (100) is adapted to:
- in collapsed condition of the locking elements (301, 305), be inserted through corresponding holes (1300) in both frame modules (1201, 1202), and
- in extended condition of the locking elements (301, 305), clamp together both columns (1203, 1204), wherein the front faces (1209, 1210) of the respective columns are in contact, and the head and rear clamping surface of the connector (100) each engages with the back face (1215, 1216) of a respective column.

12. System according to claim 11,
wherein:
- any column (1203) is hollow, comprising a front (1205) and back plate (1207) parallel to each other with a cavity therebetween, wherein the front (1205) and back plate (1207) both comprise an inner surface (1213, 1211) and an outer surface (1215, 1209), the inner surface (1213, 1211) of the front and back plate directed towards the cavity and the outer surface (1215, 1209) of the front and back plate facing away from the cavity, wherein the outer surface (1215) of the back plate corresponds to the back face of the column (1203) and the outer surface (1209) of the front plate corresponds to the front face of the column (1203),
- the system comprises at least one connector (100) according to claim 5 to 8, and
- in connected condition of the frame modules (1201, 1202), the back plate (1207) and front plate (1206) of respective columns (1203, 1204) are positioned between the head clamping surface (110) defined by the head piece (109) of the connector and the central clamping surface (309) defined by the second set of locking elements (102).

13. System according to claim 12
wherein one or more blocking elements (1500, 1501) are attached to the inner surface of the front (1206) and/or back plate of any frame module, each of the blocking elements (1500, 1501) protruding from the inner surface and extending in longitudinal direction,
such that in connected condition of the frame modules (1201, 1202), rotating the connector (100) around the longitudinal direction causes at least one of the locking elements (302, 306) of the second set (102) to engage with at least one of the blocking elements (1500, 1501), thereby blocking a further rotation of the connector (100).

14. System according to any of the claims 11 to 13, wherein:
- the sleeve (108) of the connector (100) comprises a longitudinal groove (206) at its outer surface;
- the system comprises at least one stopping clip (1800), adapted to be placed inside any of the holes (1300), the stopping clip (1800) comprising a tab (1801),
wherein the tab (1801) and the longitudinal groove (206) are adapted to form a tongue and groove connection between the stopping clip (1800) and the connector (100), thereby allowing for a displacement of the connector (100) in longitudinal connection over the length of the groove (206), while blocking a rotation of the connector (100) around the longitudinal direction.

15. System according to any of the claims 11 to 14, wherein
- any column (1203) is hollow, comprising a front (1205) and back plate (1207) parallel to each other with a cavity therebetween, wherein the front (1205) and back plate (1207) both comprise an inner surface (1213, 1211) and an outer surface (1215, 1209), the inner surface (1213, 1211) of the front and back plate directed towards the cavity and the outer surface (1215, 1209) of the front and back plate facing away from the cavity, wherein the outer surface (1215) of the back plate corresponds to the back face of the column (1203) and the outer surface (1209) of the front plate corresponds to the front face of the column (1203),
- the system comprises at least one connector (100) according to claim 9 to 10;
and wherein:
- the back plate (1207) of any frame module (1201) is adapted to be clamped between the third (103) and fourth set (104) of locking elements, in extended condition of the third (103) and fourth set (104) of locking elements;
- the third longitudinal position and fourth longitudinal position are such that, when the sleeve (108) is inserted in any of the holes (1300) and the back plate (1207) is clamped between the third (103) and fourth set (104) of locking elements, the rear outer end (201) of the sleeve (108) does not protrude beyond the outer surface (1209) of the front plate (1205).

## Patentansprüche

1. Verbinder (100) zum lösbaren Verbinden von zwei Modulen (1201, 1202) in einem modularen System für temporäre Konstruktionen, wobei der Verbinder (100) Folgendes umfasst:
- eine Hülse (108), die sich in Längsrichtung zwischen einem vorderen (200) und einem hinteren Außenende (201) erstreckt, wobei die Hülse (108) einen oder mehrere Umfangsschlitze (105, 112) an einer ersten Längsposition umfasst;
- ein Kopfstück (109), das angepasst ist, um an dem vorderen Außenende (200) der Hülse (108) angebracht zu sein, wobei das Kopfstück (109) eine flache Fläche (110) umfasst, die in angebrachtem Zustand eine vordere Klemmfläche definiert, die sich in einer Querebene befindet und der Hülse (108) zugewandt ist;
- einen ersten Satz von einem oder mehreren Verriegelungselementen (101), von denen jedes Verriegelungselement (301, 305) eine flache Fläche (310) umfasst, wobei das eine oder die mehreren Verriegelungselemente des ersten Satzes (101) in dem einen oder den mehreren Umfangsschlitzen (105, 112) in der ersten Längsposition platziert sind und bewegbar sind zwischen
∘ einem zusammengeklappten Zustand, wobei die Verriegelungselemente (301, 305) zumindest teilweise in der Hülse (108) vertieft sind, und
∘ einem ausgefahrenen Zustand, wobei die Verriegelungselemente (301, 305) von der Hülse (108) vorstehen, sodass die assoziierten vorstehenden flachen Flächen zusammen eine hintere Klemmfläche definieren, die sich in einer Querebene befindet und der vorderen Klemmfläche zugewandt ist,
wobei der Verbinder (100) angepasst ist, um zwei Modulteile (1203, 1204) zwischen der vorderen und der hinteren Klemmfläche in ausgefahrenem Zustand des ersten Satzes von Verriegelungselementen (101) zu klemmen, nachdem er durch entsprechende Löcher (1300) in den Modulteilen (1203, 1204) in zusammengeklapptem Zustand des ersten Satzes von Verriegelungselementen (101) eingeführt wurde.

2. Verbinder (100) nach Anspruch 1,
wobei ein beliebiges Verriegelungselement (301, 305) des ersten Satzes (101) eine gekrümmte Kante (700) umfasst, die von der Hülse (108) abgewandt ist.

3. Verbinder (100) nach einem der vorhergehenden Ansprüche,
wobei das Kopfstück (109) und das vordere Außenende (200) der Hülse (108) beide Schraubgewinde (111, 202) umfassen, sodass das Kopfstück (109) durch Verschrauben in Längsrichtung bewegbar ist, wodurch ermöglicht wird, den Abstand zwischen der vorderen und der hinteren Klemmfläche anzupassen.

4. Verbinder (100) nach einem der vorhergehenden Ansprüche,
wobei der Verbinder (100) ferner Folgendes umfasst:
- einen Innenkörper (400), der zumindest teilweise innerhalb der Hülse (108) platziert und in Längsrichtung bewegbar ist,
- eine erste lineare Nockenbaugruppe (401), umfassend, pro Verriegelungselement (301, 305) des ersten Satzes (101):
∘ ein Nockenelement (500), das eine Rampe (502) umfasst, die in Bezug auf die Längsrichtung geneigt ist;
∘ einen Mitnehmer (504) in Kontakt mit dem Nockenelement (500) und der angepasst ist, um auf der Rampenfläche (502) zu fahren, sodass das Bewegen des Nockenelements (500) in Längsrichtung bewirkt, dass der Mitnehmer (504) gemäß einer Verschiebung senkrecht zu der Längsrichtung bewegt wird,
wobei ein beliebiges Nockenelement (500, 501) der ersten linearen Nockenbaugruppe (401) in dem Innenkörper (400) umfasst ist und ein beliebiger Mitnehmer (504, 505) der ersten linearen Nockenbaugruppe (401) in einem Verriegelungselement (301, 305) des ersten Satzes (101) umfasst ist, wodurch eine Verschiebung eines beliebigen Verriegelungselements (301, 305) des ersten Satzes gemäß einer Richtung senkrecht zu der Längsrichtung durch Bewegen des Innenkörpers (400) in Längsrichtung ermöglicht wird.

5. Verbinder (100) nach einem der vorhergehenden Ansprüche, wobei:
- die Hülse (108) eine oder mehrere Öffnungen (106) an einer zweiten Längsposition umfasst, die sich zwischen der ersten Längsposition und dem vorderen Außenende (200) befindet;
- der Verbinder (100) einen zweiten Satz (102) von einem oder mehreren Verriegelungselementen umfasst, wobei das eine oder die mehreren Verriegelungselemente (302, 306) des zweiten Satzes (102) in der einen oder den mehreren Öffnungen (106) der Hülse (108) in der zweiten Längsposition platziert sind und bewegbar sind zwischen
∘ einem zusammengeklappten Zustand, wobei die Verriegelungselemente (302, 306) zumindest teilweise in der Hülse (108) vertieft sind, und
∘ einem ausgefahrenen Zustand, wobei die Verriegelungselemente (302, 306) von der Hülse (108) vorstehen.

6. Verbinder (100) nach Anspruch 5,
wobei:
- jede der Öffnungen (106) an der zweiten Längsposition ein Umfangsschlitz (106) ist, und
- jedes der Verriegelungselemente (302, 306) des zweiten Satzes (102) eine flache Fläche (309) umfasst, sodass in dem ausgefahrenen Zustand die assoziierten vorstehenden flachen Flächen zusammen eine zentrale Klemmfläche definieren, die sich in einer Querebene befindet und der vorderen Klemmfläche zugewandt ist.

7. Verbinder (100) nach Anspruch 5 oder 6,
wobei ein beliebiges Verriegelungselement (302, 306) des zweiten Satzes (102) eine Winkelposition aufweist, die um 90 Grad relativ zu einem der Verriegelungselemente (301, 305) des ersten Satzes (101) gedreht ist.

8. Verbinder (100) nach Anspruch 5 bis 7,
wobei der Verbinder (100) ferner eine zweite lineare Nockenbaugruppe (402) umfasst, umfassend, pro Verriegelungselement (302, 306) des zweiten Satzes (102):
- ein Nockenelement (800), das eine Rampe (801) umfasst, die in Bezug auf die Längsrichtung geneigt ist;
- einen Mitnehmer (802) in Kontakt mit dem Nockenelement (800) und der angepasst ist, um auf der Rampenfläche (801) zu fahren, sodass das Bewegen des Nockenelements (800) in Längsrichtung bewirkt, dass der Mitnehmer (802) gemäß einer Verschiebung senkrecht zu der Längsrichtung bewegt wird,
wobei ein beliebiges Nockenelement (800) der zweiten linearen Nockenbaugruppe (402) in dem Innenkörper (400) umfasst ist und ein beliebiger Mitnehmer (802) der zweiten linearen Nockenbaugruppe (402) in einem Verriegelungselement (302) des zweiten Satzes (102) umfasst ist, wodurch eine Verschiebung eines beliebigen Verriegelungselements (302, 306) des zweiten Satzes gemäß einer Richtung senkrecht zu der Längsrichtung durch Bewegen des Innenkörpers (400) in Längsrichtung ermöglicht wird,
und wobei die Längsposition des einen oder der mehreren Nockenelemente (500) der ersten linearen Nockenbaugruppe (401) und die Längsposition des einen oder der mehreren Nockenelemente (800) der zweiten linearen Nockenbaugruppe (402) so ist, dass das Bewegen des Innenkörpers (400) in Längsrichtung bewirkt, dass die Verriegelungselemente des ersten (101) und des zweiten Satzes (102) sequentiell verschoben werden.

9. Verbinder (100) nach einem der vorhergehenden Ansprüche, wobei:
- die Hülse (108) eine oder mehrere Öffnungen (107) an einer dritten Längsposition umfasst und eine oder mehrere Öffnungen (107) an einer vierten Längsposition umfasst, wobei sich die dritte und die vierte Längsposition beide zwischen der ersten Längsposition und dem vorderen Außenende (200) befinden;
- der Verbinder (100) einen dritten (103) und einen vierten Satz (104) von einem oder mehreren Verriegelungselementen umfasst, wobei das eine oder die mehreren Verriegelungselemente (303, 307; 304, 308) des dritten (103) bzw. vierten Satzes (104) in der einen oder den mehreren Öffnungen (107) der Hülse (108) an der dritten bzw. vierten Längsposition platziert sind und bewegbar sind zwischen
∘ einem zusammengeklappten Zustand, wobei die Verriegelungselemente (303, 307; 304, 308) zumindest teilweise in der Hülse (108) vertieft sind, und
∘ einem ausgefahrenen Zustand, wobei die Verriegelungselemente (303, 307; 304, 308) von der Hülse (108) vorstehen,
wobei der Verbinder (100) angepasst ist, um eine Modulplatte (1207) zwischen den Verriegelungselementen des dritten Satzes (103) und den Verriegelungselementen des vierten Satzes (104) in ausgefahrenem Zustand des dritten und des vierten Satzes von Verriegelungselementen zu klemmen, wodurch ermöglicht wird, den Verbinder (100) lösbar an einem Modul (1201) anzubringen.

10. Verbinder (100) nach Anspruch 9, wobei:
- jede der Öffnungen (107) an der dritten Längsposition und jede der Öffnungen (107) an der vierten Längsposition ein Umfangsschlitz (107) ist;
- jedes der Verriegelungselemente des dritten (103) und des vierten Satzes (104) eine flache Fläche (1002, 1003) umfasst, sodass in ausgefahrenem Zustand von sowohl dem dritten (103) als auch dem vierten Satz (104) von Verriegelungselementen die assoziierten vorstehenden flachen Flächen zusammen ein Paar von Halteflächen definieren, die sich in einer Querebene befinden und einander zugewandt sind,
und wobei:
- ein beliebiger von dem einen oder den mehreren Umfangsschlitzen an der dritten Längsposition zusammen mit einem entsprechenden Umfangsschlitz an der vierten Längsposition einen einzelnen Umfangsschlitz (107) bildet, der sich zwischen der dritten und der vierten Längsposition erstreckt, und
- ein beliebiges Verriegelungselement des dritten Satzes (303) mit einem entsprechenden Verriegelungselement (304) des vierten Satzes durch ein Zwischenelement (1004) verbunden ist, wobei jedes von dem einen oder den mehreren Zwischenelementen (1004) eine obere Fläche umfasst, die von der Hülse abgewandt ist und parallel zu der Längsrichtung ist,
wobei der Verbinder (100) angepasst ist, um eine Modulplatte (1207) zwischen beiden Halteflächen zu klemmen, wodurch ermöglicht wird, den Verbinder (100) lösbar an einem Modul (1201) anzubringen.

11. System zum lösbaren Verbinden von Rahmenmodulen (1201, 1202) in einem modularen System für temporäre Konstruktionen, wobei das System Folgendes umfasst:
- zumindest einen Verbinder (100) nach einem der vorhergehenden Ansprüche;
- zumindest zwei Rahmenmodule (1201, 1202), wobei das erste (1201) und das zweite Rahmenmodul (1202) jeweils zumindest eine Säule (1203, 1204) umfassen, wobei
∘ eine beliebige Säule (1203) eine flache Rückfläche (1215) und eine flache vordere Fläche (1209) aufweist, die sich in Höhenrichtung und Querrichtung erstrecken;
∘ eine beliebige Säule (1203) ein oder mehrere Löcher (1300) umfasst, die sich in Längsrichtung zwischen der Rück- und vorderen Fläche erstrecken, und
wobei der Verbinder (100) zu Folgendem angepasst ist:
- in zusammengeklapptem Zustand der Verriegelungselemente (301, 305) durch entsprechende Löcher (1300) in beiden Rahmenmodulen (1201, 1202) eingeführt zu werden, und
- in ausgefahrenem Zustand der Verriegelungselemente (301, 305) beide Säulen (1203, 1204) zusammenzuklemmen, wobei die vorderen Flächen (1209, 1210) der jeweiligen Säulen in Kontakt sind und die Kopf- und hintere Klemmfläche des Verbinders (100) jeweils mit der Rückfläche (1215, 1216) einer jeweiligen Säule eingreifen.

12. System nach Anspruch 11,
wobei:
- eine beliebige Säule (1203) hohl ist und eine vordere (1205) und eine Rückplatte (1207) parallel zueinander mit einem Hohlraum dazwischen umfasst, wobei die vordere (1205) und die Rückplatte (1207) beide eine Innenfläche (1213, 1211) und eine Außenfläche (1215, 1209) umfassen, wobei die Innenfläche (1213, 1211) der vorderen und der Rückplatte zu dem Hohlraum gerichtet ist und die Außenfläche (1215, 1209) der vorderen und der Rückplatte von dem Hohlraum abgewandt ist, wobei die Außenfläche (1215) der Rückplatte der Rückfläche der Säule (1203) entspricht und die Außenfläche (1209) der vorderen Platte der vorderen Fläche der Säule (1203) entspricht,
- das System zumindest einen Verbinder (100) nach Anspruch 5 bis 8 umfasst, und
- in verbundenem Zustand der Rahmenmodule (1201, 1202) die Rückplatte (1207) und die vordere Platte (1206) von jeweiligen Säulen (1203, 1204) zwischen der Kopfklemmfläche (110), die durch das Kopfstück (109) des Verbinders definiert ist, und der zentralen Klemmfläche (309), die durch den zweiten Satz von Verriegelungselementen (102) definiert ist, positioniert sind.

13. System nach Anspruch 12,
wobei ein oder mehrere Blockierelemente (1500, 1501) an der Innenfläche der vorderen (1206) und/oder der Rückplatte eines beliebigen Rahmenmoduls angebracht sind, wobei jedes der Blockierelemente (1500, 1501) von der Innenfläche vorsteht und sich in Längsrichtung erstreckt,
sodass in verbundenem Zustand der Rahmenmodule (1201, 1202) das Drehen des Verbinders (100) um die Längsrichtung bewirkt, dass zumindest eines der Verriegelungselemente (302, 306) des zweiten Satzes (102) mit zumindest einem der Blockierungselemente (1500, 1501) eingreift, wodurch eine weitere Drehung des Verbinders (100) blockiert wird.

14. System nach einem der Ansprüche 11 bis 13, wobei:
- die Hülse (108) des Verbinders (100) eine Längsnut (206) an ihrer Außenfläche umfasst;
- das System zumindest einen Anschlagclip (1800) umfasst, der angepasst ist, um innerhalb eines beliebigen der Löcher (1300) platziert zu sein, wobei der Anschlagclip (1800) eine Lasche (1801) umfasst,
wobei die Lasche (1801) und die Längsnut (206) angepasst sind, um eine Feder- und Nutverbindung zwischen dem Anschlagclip (1800) und dem Verbinder (100) zu bilden, wodurch eine Verschiebung des Verbinders (100) in Längsverbindung über die Länge der Nut (206) ermöglicht wird, während eine Drehung des Verbinders (100) um die Längsrichtung blockiert wird.

15. System nach einem der Ansprüche 11 bis 14,
wobei
- eine beliebige Säule (1203) hohl ist und eine vordere (1205) und eine Rückplatte (1207) parallel zueinander mit einem Hohlraum dazwischen umfasst, wobei die vordere (1205) und die Rückplatte (1207) beide eine Innenfläche (1213, 1211) und eine Außenfläche (1215, 1209) umfassen, wobei die Innenfläche (1213, 1211) der vorderen und der Rückplatte zu dem Hohlraum gerichtet ist und die Außenfläche (1215, 1209) der vorderen und der Rückplatte von dem Hohlraum abgewandt ist, wobei die Außenfläche (1215) der Rückplatte der Rückfläche der Säule (1203) entspricht und die Außenfläche (1209) der vorderen Platte der vorderen Fläche der Säule (1203) entspricht,
- das System zumindest einen Verbinder (100) nach Anspruch 9 bis 10 umfasst; und
wobei:
- die Rückplatte (1207) eines beliebigen Rahmenmoduls (1201) angepasst ist, um zwischen dem dritten (103) und dem vierten Satz (104) von Verriegelungselementen in ausgefahrenem Zustand des dritten (103) und des vierten Satzes (104) von Verriegelungselementen geklemmt zu sein;
- die dritte Längsposition und die vierte Längsposition so sind, dass, wenn die Hülse (108) in ein beliebiges der Löcher (1300) eingesetzt ist und die Rückplatte (1207) zwischen dem dritten (103) und dem vierten Satz (104) von Verriegelungselementen geklemmt ist, das hintere Außenende (201) der Hülse (108) nicht über die Außenfläche (1209) der vorderen Platte (1205) hinausragt.

## Revendications

1. Connecteur (100) destiné à connecter de manière amovible deux modules (1201, 1202) dans un système modulaire pour des constructions temporaires, ledit connecteur (100) comprenant :
- un manchon (108) s'étendant dans une direction longitudinale entre une extrémité externe avant (200) et une extrémité externe arrière (201), ledit manchon (108) comprenant une ou plusieurs fentes circonférentielles (105, 112) au niveau d'une première position longitudinale ;
- une pièce de tête (109) adaptée pour être fixée à l'extrémité externe avant (200) du manchon (108), la pièce de tête (109) comprenant une surface plate (110), dans l'état fixé définissant une surface de serrage avant située dans un plan transversal et faisant face au manchon (108) ;
- un premier ensemble d'un ou plusieurs éléments de verrouillage (101), dont chaque élément de verrouillage (301, 305) comprend une surface plate (310), ledit ou lesdits éléments de verrouillage du premier ensemble (101) étant placés dans ladite ou lesdites fentes circonférentielles (105, 112) au niveau de la première position longitudinale et étant mobiles entre
∘ un état replié, lesdits éléments de verrouillage (301, 305) étant au moins partiellement encastrés dans le manchon (108), et
∘ un état étendu, lesdits éléments de verrouillage (301, 305) faisant saillie du manchon (108), de sorte que les surfaces plates saillantes associées définissent ensemble une surface de serrage arrière située dans un plan transversal et faisant face à la surface de serrage avant,
le connecteur (100) étant adapté pour serrer deux parties de module (1203, 1204) entre les surfaces de serrage avant et arrière dans l'état étendu du premier ensemble d'éléments de verrouillage (101), après avoir été inséré à travers des trous correspondants (1300) dans les parties de module (1203, 1204) dans l'état replié du premier ensemble d'éléments de verrouillage (101).

2. Connecteur (100) selon la revendication 1,
tout élément de verrouillage (301, 305) du premier ensemble (101) comprenant un bord incurvé (700) tournant le dos au manchon (108).

3. Connecteur (100) selon l'une quelconque des revendications précédentes,
ladite pièce de tête (109) et ladite extrémité externe avant (200) du manchon (108) comprenant toutes deux un filetage (111, 202), de sorte que la pièce de tête (109), en étant vissée, soit mobile dans la direction longitudinale, permettant ainsi d'adapter la distance entre les surfaces de serrage avant et arrière.

4. Connecteur (100) selon l'une quelconque des revendications précédentes, ledit connecteur (100) comprenant en outre :
- un corps intérieur (400), placé au moins partiellement à l'intérieur du manchon (108) et mobile dans la direction longitudinale,
- un premier ensemble came linéaire (401), comprenant, par élément de verrouillage (301, 305) du premier ensemble (101) :
∘ un élément came (500), comprenant une rampe (502) qui est inclinée par rapport à la direction longitudinale ;
∘ un suiveur (504), en contact avec l'élément came (500) et étant adapté pour courir sur la surface de rampe (502), de sorte que le déplacement de l'élément came (500) dans la direction longitudinale entraîne le déplacement du suiveur (504) selon une translation perpendiculaire à la direction longitudinale,
tout élément came (500, 501) du premier ensemble came linéaire (401) étant compris dans le corps intérieur (400), et tout suiveur (504, 505) du premier ensemble came linéaire (401) étant compris dans un élément de verrouillage (301, 305) du premier ensemble (101), permettant ainsi une translation de tout élément de verrouillage (301, 305) du premier ensemble selon une direction perpendiculaire à la direction longitudinale, en déplaçant le corps intérieur (400) dans la direction longitudinale.

5. Connecteur (100) selon l'une quelconque des revendications précédentes,
- ledit manchon (108) comprenant une ou plusieurs ouvertures (106) au niveau d'une deuxième position longitudinale, située entre la première position longitudinale et l'extrémité externe avant (200) ;
- ledit connecteur (100) comprenant un deuxième ensemble (102) d'un ou plusieurs éléments de verrouillage, ledit ou lesdits éléments de verrouillage (302, 306) du deuxième ensemble (102) étant placés dans la ou les ouvertures (106) du manchon (108) au niveau de la deuxième position longitudinale, et étant mobiles entre
∘ un état replié, lesdits éléments de verrouillage (302, 306) étant au moins partiellement encastrés dans le manchon (108), et
∘ un état étendu, lesdits éléments de verrouillage (302, 306) faisant saillie à partir du manchon (108).

6. Connecteur (100) selon la revendication 5,
- chacune des ouvertures (106) au niveau de la deuxième position longitudinale étant une fente circonférentielle (106), et
- chacun des éléments de verrouillage (302, 306) du deuxième ensemble (102) comprenant une surface plate (309), de sorte que dans l'état étendu, les surfaces plates saillantes associées définissent ensemble une surface de serrage centrale située dans un plan transversal et faisant face à la surface de serrage avant.

7. Connecteur (100) selon la revendication 5 ou 6,
tout élément de verrouillage (302, 306) du deuxième ensemble (102) comportant une position angulaire tournée de plus de 90 degrés par rapport à l'un des éléments de verrouillage (301, 305) du premier ensemble (101).

8. Connecteur (100) selon les revendications 5 à 7, ledit connecteur (100) comprenant en outre un deuxième ensemble came linéaire (402), comprenant, par élément de verrouillage (302, 306) du deuxième ensemble (102) :
- un élément came (800), comprenant une rampe (801) qui est inclinée par rapport à la direction longitudinale ;
- un suiveur (802), en contact avec l'élément came (800) et étant adapté pour courir sur la surface de rampe (801), de sorte que le déplacement de l'élément came (800) dans la direction longitudinale entraîne le déplacement du suiveur (802) selon une translation perpendiculaire à la direction longitudinale,
tout élément came (800) du deuxième ensemble came linéaire (402) étant compris dans le corps intérieur (400), et tout suiveur (802) du deuxième ensemble came linéaire (402) étant compris dans un élément de verrouillage (302) du deuxième ensemble (102), permettant ainsi une translation de tout élément de verrouillage (302, 306) du deuxième ensemble selon une direction perpendiculaire à la direction longitudinale, en déplaçant le corps intérieur (400) dans la direction longitudinale,
et ladite position longitudinale du ou des éléments cames (500) du premier ensemble came linéaire (401), et ladite position longitudinale du ou des éléments cames (800) du deuxième ensemble came linéaire (402), étant de sorte que le déplacement du corps intérieur (400) dans la direction longitudinale entraîne la translation séquentielle des éléments de verrouillage du premier (101) et du deuxième ensemble (102).

9. Connecteur (100) selon l'une quelconque des revendications précédentes,
- ledit manchon (108) comprenant une ou plusieurs ouvertures (107) au niveau d'une troisième position longitudinale, et comprenant une ou plusieurs ouvertures (107) au niveau d'une quatrième position longitudinale, lesdites troisième et quatrième positions longitudinales étant toutes deux situées entre la première position longitudinale et l'extrémité externe avant (200) ;
- ledit connecteur (100) comprenant un troisième (103) et un quatrième ensemble (104) d'un ou de plusieurs éléments de verrouillage, ledit ou lesdits éléments de verrouillage (303, 307 ; 304, 308) du troisième (103), respectivement quatrième (104), ensemble étant placés dans la ou les ouvertures (107) du manchon (108) au niveau de la troisième, respectivement quatrième, position longitudinale et étant mobiles entre
∘ un état replié, lesdits éléments de verrouillage (303, 307 ; 304, 308) étant au moins partiellement encastrés dans le manchon (108), et
∘ un état étendu, lesdits éléments de verrouillage (303, 307 ; 304, 308) faisant saillie à partir du manchon (108),
ledit connecteur (100) étant adapté pour serrer une plaque de module (1207) entre les éléments de verrouillage du troisième ensemble (103) et les éléments de verrouillage du quatrième ensemble (104), dans l'état étendu des troisième et quatrième ensembles d'éléments de verrouillage, permettant ainsi de fixer de manière amovible le connecteur (100) à un module (1201).

10. Connecteur (100) selon la revendication 9,
- chacune des ouvertures (107) au niveau de la troisième position longitudinale et chacune des ouvertures (107) au niveau de la quatrième position longitudinale étant une fente circonférentielle (107) ;
- chacun des éléments de verrouillage du troisième (103) et du quatrième ensemble (104) comprenant une surface plate (1002, 1003), de sorte que dans l'état étendu du troisième (103) et du quatrième ensemble (104) d'éléments de verrouillage, les surfaces plates saillantes associées définissent ensemble une paire de surfaces de maintien situées dans un plan transversal et se faisant face,
et
- l'une quelconque de la ou des fentes circonférentielles au niveau de la troisième position longitudinale formant, ensemble avec une fente circonférentielle correspondante au niveau de la quatrième position longitudinale, une seule fente circonférentielle (107) s'étendant entre la troisième et la quatrième position longitudinale, et
- tout élément de verrouillage du troisième ensemble (303) étant relié à un élément de verrouillage correspondant (304) du quatrième ensemble par un élément intermédiaire (1004), **chacun** du ou des éléments intermédiaires (1004) comprenant une surface supérieure tournant le dos au manchon et étant parallèle à la direction longitudinale,
ledit connecteur (100) étant adapté pour serrer une plaque de module (1207) entre les deux surfaces de maintien, permettant ainsi de fixer de manière amovible le connecteur (100) à un module (1201).

11. Système destiné à connecter de manière amovible des modules de cadre (1201, 1202) dans un système modulaire pour des constructions temporaires, le système comprenant :
- au moins un connecteur (100) selon l'une quelconque des revendications précédentes ;
- au moins deux modules de cadre (1201, 1202), ledit premier (1201) et ledit second module de cadre (1202) comprenant chacun au moins une colonne (1203, 1204),
∘ toute colonne (1203) comportant une face arrière plate (1215) et une face avant plate (1209) s'étendant dans la direction de la hauteur et dans la direction transversale ;
∘ toute colonne (1203) comprenant un ou plusieurs trous (1300) s'étendant dans une direction longitudinale entre la face arrière et la face avant, et
ledit connecteur (100) étant adapté pour :
- dans l'état replié des éléments de verrouillage (301, 305), être inséré à travers des trous correspondants (1300) dans les deux modules de cadre (1201, 1202), et
- dans l'état étendu des éléments de verrouillage (301, 305), serrer ensemble les deux colonnes (1203, 1204), lesdites faces avant (1209, 1210) des colonnes respectives étant en contact, et ladite surface de serrage de tête et arrière du connecteur (100) se mettant en prise chacune avec la face arrière (1215, 1216) d'une colonne respective.

12. Système selon la revendication 11,
- toute colonne (1203) étant creuse, comprenant une plaque avant (1205) et une plaque arrière (1207) parallèles l'une à l'autre avec une cavité entre elles, ladite plaque avant (1205) et ladite plaque arrière (1207) comprenant toutes deux une surface interne (1213, 1211) et une surface externe (1215, 1209), ladite surface interne (1213, 1211) de la plaque avant et de la plaque arrière étant dirigée vers la cavité et ladite surface externe (1215, 1209) de la plaque avant et de la plaque arrière tournant le dos à la cavité, ladite surface externe (1215) de la plaque arrière correspondant à la face arrière de la colonne (1203) et ladite surface externe (1209) de la plaque avant correspondant à la face avant de la colonne (1203),
- ledit système comprenant au moins un connecteur (100) selon les revendications 5 à 8, et
- dans l'état connecté des modules de cadre (1201, 1202), ladite plaque arrière (1207) et ladite plaque avant (1206) des colonnes respectives (1203, 1204) étant positionnées entre la surface de serrage de tête (110) définie par la pièce de tête (109) du connecteur et la surface de serrage centrale (309) définie par le deuxième ensemble d'éléments de verrouillage (102).

13. Système selon la revendication 12,
un ou plusieurs éléments de blocage (1500, 1501) étant fixés à la surface interne de la plaque avant (1206) et/ou de la plaque arrière de tout module de cadre, chacun des éléments de blocage (1500, 1501) faisant saillie à partir de la surface interne et s'étendant dans une direction longitudinale,
de sorte que dans l'état connecté des modules de cadre (1201, 1202), la rotation du connecteur (100) autour de la direction longitudinale amène au moins l'un des éléments de verrouillage (302, 306) du deuxième ensemble (102) à se mettre en prise avec au moins l'un des éléments de blocage (1500, 1501), bloquant ainsi une rotation supplémentaire du connecteur (100).

14. Système selon l'une quelconque des revendications 11 à 13,
- ledit manchon (108) du connecteur (100) comprenant une rainure longitudinale (206) au niveau de sa surface externe ;
- ledit système comprenant au moins une pince d'arrêt (1800), adaptée pour être placée à l'intérieur de l'un quelconque des trous (1300), la pince d'arrêt (1800) comprenant une patte (1801),
ladite patte (1801) et ladite rainure longitudinale (206) étant adaptées pour former une connexion de patte et de rainure entre la pince d'arrêt (1800) et le connecteur (100), permettant ainsi un déplacement du connecteur (100) en connexion longitudinale sur la longueur de la rainure (206), tout en bloquant une rotation du connecteur (100) autour de la direction longitudinale.

15. Système selon l'une quelconque des revendications 11 à 14,
- toute colonne (1203) étant creuse, comprenant une plaque avant (1205) et une plaque arrière (1207) parallèles l'une à l'autre avec une cavité entre elles, ladite plaque avant (1205) et ladite plaque arrière (1207) comprenant toutes deux une surface interne (1213, 1211) et une surface externe (1215, 1209), ladite surface interne (1213, 1211) de la plaque avant et de la plaque arrière étant dirigée vers la cavité et ladite surface externe (1215, 1209) de la plaque avant et de la plaque arrière tournant le dos à la cavité, ladite surface externe (1215) de la plaque arrière correspondant à la face arrière de la colonne (1203) et ladite surface externe (1209) de la plaque avant correspondant à la face avant de la colonne (1203),
- ledit système comprenant au moins un connecteur (100) selon les revendications 9 à 10, et
- ladite plaque arrière (1207) de tout module de cadre (1201) étant adaptée pour être serrée entre le troisième (103) et le quatrième ensemble (104) d'éléments de verrouillage, dans l'état étendu du troisième (103) et du quatrième ensemble (104) d'éléments de verrouillage ;
- ladite troisième position longitudinale et ladite quatrième position longitudinale étant de sorte que, lorsque le manchon (108) est inséré dans l'un quelconque des trous (1300) et que la plaque arrière (1207) est serrée entre le troisième (103) et le quatrième (104) ensemble d'éléments de verrouillage, l'extrémité externe arrière (201) du manchon (108) ne fasse pas saillie au-delà de la surface externe (1209) de la plaque avant (1205).
